Europäisches Patentamt

European Patent Office

Office européen des brevets

(19)

(11) Numéro de publication: **0 395 469**

**A2**

## (12) DEMANDE DE BREVET EUROPEEN

(21) Numéro de dépôt: 90400998.2

(51) Int. Cl.5: **G06F 15/02**

(22) Date de dépôt: **11.04.90**

(30) Priorité: **14.04.89 FR 8904983**

(43) Date de publication de la demande:
**31.10.90 Bulletin 90/44**

(84) Etats contractants désignés:
**AT BE CH DE DK ES FR GB GR IT LI LU NL SE**

(71) Demandeur: **TELEMATIQUE VIDEOTEX FRANCAISE T.V.F.**
**Parc d'Innovation "Le Stratège"**

**F-67404 Illkirch(FR)**

(72) Inventeur: **Truchet, Philippe** —
**37, square Anatole France**
**F-91250 Saint Germain Les Corbeilles(FR)**

(74) Mandataire: **Michelet, Alain et al**
**BUGNION ASSOCIES 55, rue Boissonade**
**F-75014 Paris(FR)**

(54) **Micro-ordinateur portatif.**

(57) Micro-ordinateur portatif destiné à être utilisé aussi bien comme un terminal de saisie d'infomations, que comme un véritable micro-ordinateur personnel interactif, notamment compatible avec d'autres micro-ordinateurs personnels, et pouvant donc exécuter les mêmes programmes d'applications (bureautique, gestion, calcul ... ). comprenant au moins un microprocesseur central (2), une mémoire vive centrale (3), un écran de visualisation (4), et une pluralité de périphériques (11, 12, 13 ... ) intégrés, caractérisé en ce qu'il comporte une surface tactile transparente (14) recouvrant l'écran de visualisation (4), et des moyens (15, 16, 17, 18, 19) électroniques d'émulation variable, au gré de l'utilisateur, de l'écran de visualisation (4) et de la surface tactile (14), permettant de gérer toute zone d'écran soit en tant que zone d'affichage d'informations, soit en tant que zone de visualisation de fonctions réalisées sur la surface tactile (14), et en ce que les moyens (15, 16, 17, 18, 19) électroniques d'émulation variable sont reliés à la surface tactile (14) d'une part pour pouvoir être eux-mêmes commandés à partir de cette surface tactile (14) et d'autre part pour en gérer l'émulation, de sorte qu'aucun clavier spécifique n'est nécessaire pour dialoguer avec le micoordinateur (1).

FIG.2

## MICRO-ORDINATEUR PORTATIF

L'invention concerne un micro-ordinateur destiné à être utilisé aussi bien comme un terminal de saisie d'informations, que comme un véritable micro-ordinateur interactif compatible avec d'autres micro-ordinateurs -notamment du type IBM-PC (marque déposée)-.

La micro-informatique, c'est-à-dire le domaine technique des ordinateurs à microprocesseurs trouve essentiellement deux types d'applications radicalement différentes correspondant respectivement à deux types de technologie et de conception également radicalement différentes. Dans une première application connue, la micro-informatique permet la réalisation de systèmes complets de gestion des informations, autonomes, de faibles coûts et dimensions généralement dénommés micro-ordinateurs personnels. De tels micro-ordinateurs permettent de réaliser avec un seul système un poste de travail individuel complet dédié à une fonction précise (bureautique, CAO, calculs, ...). L'exemple type de tels micros-ordinateurs personnels bien connus est donné par les systèmes IBM-PC (marque déposée). Ces micro-ordinateurs font l'objet d'un développement récent de leur technologie en vue d'une utilisation en réseaux, permettant une gestion multi-utilisateurs, multi-tâches, ... Dans ce domaine de la micro-informatique personnelle, on a cherché récemment à diminuer le plus possible les dimensions et le poids des systèmes afin de les rendre portables. Ainsi, plusieurs constructeurs ont réussi à réaliser ce qu'il est convenu de dénommer des "micro-ordinateurs portables" incorporant la majorité des éléments classiquement retrouvés sur les micro-ordinateurs personnels, mais selon une taille et un poids suffisamment réduits pour autoriser leur transport facile. Classiquement, de tels micro-ordinateurs portables pèsent entre 5 et 15kg et ont les dimensions générales d'une mallette. Dans les meilleurs cas, on peut obtenir un poids de l'ordre de 3kg, en renonçant à certaines performances (absence de certains éléments tels que les disques durs, ...). Un micro-ordinateur portable est classiquement constitué d'un microprocesseur central, d'une mémoire vive centrale, d'un écran de visualisation à cristaux liquides, d'un clavier alphanumérique, d'un lecteur de disquettes, d'un disque dur magnétique, et éventuellement d'une souris.

De tels micro-ordinateurs portables peuvent ainsi être aisément transportés d'un lieu de travail à un autre. Néanmoins, et malgré les progrès extraordinaires de la technologie en matière de miniaturisation, aucun des micro-ordinateurs portables ne peut être utilisé véritablement lorsqu'il est porté par l'utilisateur. Ainsi, les dimensions, le poids et les caractéristiques ergonomiques des micro-ordinateurs portables nécessitent de poser ces micro-ordinateurs sur une table de travail afin de pouvoir les utiliser. Par exemple, il n'est pas possible de porter le micro-ordinateur avec un bras et de l'utiliser simultanément avec l'autre bras. Egalement, il n'est pas possible de porter de tels micro-ordinateurs portables sur de longues distances et pendant de longues périodes, de la même façon qu'une calculatrice électronique ou qu'un simple cahier. En conséquence, ces micro-ordinateurs portables ne constituent pas véritablement un outil de travail portatif.

Le second type d'application de la micro-informatique est celui de terminaux de saisie d'informations portatifs à usage industriel. En effet, parallèlement à la micro-informatique personnelle, et de façon totalement indépendante, les industriels ont ressenti le besoin, dans diverses applications, de disposer de terminaux portatifs capables de saisir de façon automatique et simple un grand nombre d'informations. Pour chacune des applications industrielles concernées, on a donc développé des terminaux de saisie portatifs dédiés uniquement à cette application, et entièrement préprogrammés et conçus en fonction de la méthode d'acquisition et du type des données à saisir. Ainsi, certains constructeurs proposent des dispositifs de poche comportant un écran de taille extrêmement limitée (classiquement 2 lignes et 16 caractères), un clavier comprenant les touches nécessaires compte tenu de l'application (classiquement entre 20 et 40 touches), un microprocesseur et une mémoire (notamment de l'ordre de quelques dizaines de kilo-octets) permettant l'enregistrement des données. L'avantage d'un tel dispositif est son faible coût et son caractère parfaitement portatif. De tels dispositifs sont par exemple utilisés pour réaliser la saisie d'inventaires de magasins. Dans cette utilisation, ils sont par exemple reliés à un crayon optique permettant de lire les codes à barres figurant sur les produits.

Dans les versions les plus sophistiquées de ces terminaux de saisie portatifs connus, ceux-ci comprennent un clavier alphanumérique complet, un écran de dimensions légèrement plus importants, à savoir classiquement de 8 lignes et 40 caractères, et ont des dimensions globales comprises entre 15 et 20cm en largeur et 20 et 30cm en longueur. Ces derniers dispositifs comprennent également un microprocesseur et une mémoire associés. Ils offrent des possibilités de calculs et de programmations plus importantes que les dispositifs de poche mentionnés ci-dessus, grâce à la présence d'un clavier alphanumérique du type classique complet. Néanmoins, leurs possibilités sont extrêmement limitées et, si elles sont suffisantes dans les utilisations auxquelles ils sont dédiés, ils ne permettent pas pour autant de les utiliser en tant que véritables micro-ordinateurs. En particulier, ces terminaux de saisie intelligents à microprocesseurs ne sont aucunement compatibles avec les micro-ordinateurs personnels connus, et ne peuvent donc pas supporter les nombreux logiciels actuellement développés dans le domaine de la micro-informatique personnelle. Ces terminaux de saisie les plus sophistiqués sont par exemple utilisés par les agents commerciaux pour gérer leur fichier clients et enregistrer des commandes. Ils sont également utilisés pour relever les compteurs (eau, gaz, électricité, ...) et, dans le domaine militaire, pour enregistrer des mesures prises sur le terrain.

Entre ces deux extrêmes de terminaux de saisie industriels, de nombreuses entreprises et industries ont développé leurs propres terminaux adaptés en fonction de leurs propres besoins. Chaque dispositif comporte en général un clavier spécifique, un microprocesseur préprogrammé selon un logiciel spécifique, une mémoire et un écran adapté en fonction des besoins.

Dans ce contexte de l'état de la technique, on ne connaît aucun micro-ordinateur qui allie les avantages de compatibilité et de performances des micro-ordinateurs personnels, aux avantages procurés par les terminaux de saisie industriels. En effet, jusqu'à maintenant, chacun des deux domaines techniques mentionnés ci-dessus s'est limité à des normes spécifiques qu'il s'est imposé, et qui constituent des préjugés techniques importants l'empêchant de faire appel, a priori, à la technologie voisine. Ainsi, dans le domaine de la micro-informatique personnelle, il est jugé nécessaire de pouvoir utiliser avec un micro-ordinateur portable les disquettes magnétiques aux formats standard. Dans ce domaine, on considère également nécessaire de pourvoir le micro-ordinateur d'un disque dur magnétique dont la capacité est au moins de 20 mégabytes. Au contraire, dans le domaine des terminaux de saisie industriels, aucune disquette ni aucun disque dur n'est nécessaire. De plus, on jugeait dans ce domaine technique que les écrans et claviers standard connus dans la micro-informatique personnelle n'offrent pas d'avantages dans les applications du type industriel. Ainsi, aucun des constructeurs de terminaux de saisie intelligents n'a cherché jusqu'à maintenant à procurer un dispositif qui soit compatible avec les micro-ordinateurs personnels classiques.

De plus, en pratique, la configuration et le type des périphériques influencent grandement sur la compatibilité d'un micro-ordinateur avec les logiciels compatibles IBM-PC (marque déposée) qui sont souvent fondés sur les périphériques standard et en exploitent les spécificités. C'est pourquoi les appareils dotés de périphériques non compatibles IBM-PC (marque déposée) ou non dotés de tous les périphériques ne sont pas véritablement compatibles.

L'invention se pose donc comme problème de remédier simultanément aux inconvénients des micro-ordinateurs connus dans le domaine de la micro-informatique personnelle d'une part, et dans celui des terminaux de saisie intelligents d'autre part, en fournissant un dispositif qui allie les avantages de chacune des deux technologies.

Plus particulièrement, l'invention a pour objet de proposer un micro-ordinateur portatif destiné à être utilisé aussi bien comme un terminal de saisie d'informations, que comme un véritable micro-ordinateur interactif, notamment compatible avec les micro-ordinateurs personnels connus tels que IBM-PC (marque déposée), ... L'invention vise donc à proposer un micro-ordinateur dont le poids et les dimensions permettent son utilisation alors qu'il est porté effectivement, et qui par ailleurs ait des performances similaires aux micro-ordinateurs personnels connus, et puisse en exploiter les logiciels et progiciels d'applications connus. Par exemple, l'invention vise à proposer un terminal de saisie d'informations intelligent sur lequel l'utilisateur puisse utiliser des logiciels standard de bureautique (traitement de texte, tableurs, gestion de base de données, ...).

Un autre objet de l'invention est de proposer un tel micro-ordinateur dont les dimensions et les caractéristiques relatives de l'écran et du clavier peuvent être modifiées à volonté et à tout instant selon toutes configurations possibles par l'utilisateur.

Un autre objet de l'invention est de proposer un tel micro-ordinateur qui ait des performances similaires au moins à celles d'un micro-ordinateur non portatif, par exemple du type IBM-PC (vitesse, puissance, mémoire ...).

Un autre objet de l'invention est de proposer un tel micro-ordinateur qui incorpore une mémoire de masse fixe de dimension suffisante, notamment de l'ordre de plusieurs mégabytes. Un autre objet de l'invention est de proposer un tel micro-ordinateur qui incorpore une mémoire de masse amovible similaire à une disquette. Plus généralement, un objet de l'invention est de proposer un nouveau type de mémoire de masse amovible similaire à une disquette.

Un autre objet de l'invention est de proposer un tel micro-ordinateur qui soit adapté à une utilisation en environnement hostile, et qui donc soit robuste et totalement étanche.

Un autre objet de l'invention est de proposer un micro-ordinateur qui soit capable de communiquer de façon extrêmement simple avec un micro-ordinateur personnel classique, ou avec d'autres périphériques. Plus précisément, un objet de l'invention est de proposer un tel micro-ordinateur qui puisse utiliser les données présentes en mémoire de masse d'un micro-ordinateur personnel classique et, inversement, dont les données présentes en mémoire de masse puissent être utilisées directement par un micro-ordinateur personnel classique. Plus généralement, un objet de l'invention est de proposer un nouveau mode de communication entre micro-ordinateur(s) et ou périphérique(s).

Un autre objet de l'invention es de proposer un tel micro-ordinateur qui offre une ergonomie et une convivialité meilleures que les micro-ordinateurs personnels ou que les terminaux de saisie intelligents connus.

Un autre objet de l'invention est de proposer un tel micro-ordinateur qui n'incorpore pas d'organes mécaniques mobiles tels que ceux nécessaires à l'exploitation d'un disque dur ou d'une disquette magnétique.

Un autre objet de l'invention est de proposer un tel micro-ordinateur qui incorpore sa propre alimentation électrique. et qui possède une autonomie de fonctionnement compatible avec son utilisation, notamment de plus d'une journée.

Pour ce faire. l'invention propose un micro-ordinateur portatif destiné à être utilisé aussi bien comme terminal de saisie d'informations. que comme un véritable micro-ordinateur personnel interactif. notamment compatible avec d'autres micro-ordinateurs personnels. et pouvant donc exécuter les mêmes programmes d'applications (bureautique. gestion. calculs. ...). comprenant au moins un microprocesseur central, une mémoire vive centrale, un écran de visualisation. et une pluralité de périphériques intégrés. caractérisé en ce qu'il comporte une surface tactile transparente recouvrant l'écran de visualisation, et des moyens électroniques d'émulation variable au gré de l'utilisateur de l'écran de visualisation et de la surface tactile, permettant de gérer toute zone d'écran soit en tant que zone d'affichage d'informations. soit en tant que zone de visualisation de fonctions réalisées sur la surface tactile, et en ce que ces moyens électroniques d'émulation variable sont reliés à la surface tactile d'une part pour pouvoir être eux-mêmes commandés à partir de cette surface tactile, et d'autre part pour en gérer l'émulation, de sorte qu'aucun clavier spécifique n'est nécessaire pour dialoguer avec le micro-ordinateur. Le microprocesseur central et les moyens électroniques d'émulation variable sont aptes à gérer les zones d'écran selon deux modes possibles. l'utilisateur pouvant choisir l'un ou l'autre de ces modes : un mode incrustation selon lequel l'écran est partagé, au gré de l'utilisateur, en au moins une zone d'affichage d'informations et au moins une zone de visualisation de fonctions ; et un mode superposition selon lequel tout l'écran est utilisé pour l'affichage d'informations, la visualisation des fonctions réalisées sur la surface tactile pouvant être, au gré de l'utilisateur, superposée à l'affichage d'informations qui se trouvent alors masquées par cette visualisation. Des moyens extérieurs de commande -notamment au moins une touche- des moyens électroniques d'émulation variable permettent de passer d'un mode de gestion de zones d'écran à l'autre, à tout instant.

Les moyens électroniques d'émulation variable comportent un microprocesseur d'émulation indépendant, dédié à et préprogrammé pour la gestion de l'écran et de la surface tactile selon le choix de l'utilisateur, et une interface électronique reliant ce microprocesseur d'émulation au microprocesseur central. Les moyens électroniques d'émulation variable sont préprogrammés de façon à gérer le contact du doigt de l'utilisateur sur la surface tactile à la manière d'une souris. Ladite interface comprend : une mémoire vive statique RAM à double accès reliée aux bus de données et d'adresse de chacun des microprocesseurs central et d'émulation ; une mémoire FIFO d'adresse dont l'entrée est reliée au bus d'adresse du microprocesseur central, et la sortie est reliée au bus de données du microprocesseur d'émulation ; une mémoire FIFO d'écriture permettant de transférer les données par blocs, en mode DMA ("Direct Memory Access") du bus de données du microprocesseur central sur le bus de données du microprocesseur d'émulation auxquelles elle est reliée : une mémoire FIFO de lecture permettant de transférer les données par blocs, en mode DMA. du bus de données du microprocesseur d'émulation sur le bus de données du microprocesseur central auxquels elle est reliée.

L'invention propose également un micro-ordinateur portatif destiné à être utilisé aussi bien comme un terminal de saisie d'informations, que comme un véritable micro-ordinateur personnel interactif, notamment compatible avec d'autres micro-ordinateurs personnels. et pouvant donc exécuter les mêmes programmes d'applications (bureautique, gestion, calculs, ...) comprenant au moins un microprocesseur central. une mémoire vive centrale, un écran de visualisation et une pluralité de périphériques intégrés, caractérisé en ce qu'il comporte un microprocesseur distinct du microprocesseur central, ce microprocesseur distinct étant dédié à et programmé pour la gestion de périphériques et simulant en permanence pour le microprocesseur central le fonctionnement de ces périphériques. De la sorte le microprocesseur central qui est le seul à exécuter les programmes du système d'exploitation ou d'application voit en permanence les périphériques compatibles IBM-PC (marque déposée) nécessaires via le microprocesseur distinct.

Dans le cas d'un micro-ordinateur ayant un écran à émulation variable, le microprocesseur distinct de gestion des périphériques peut être le même que le microprocesseur d'émulation gérant l'écran et la surface tactile qui sont des périphériques particuliers.

Le micro-ordinateur selon l'invention comporte donc deux microprocesseurs : l'un est dédié aux programmes du DOS et d'application (microprocesseur central) et l'autre est dédié à la gestion des périphériques. Les deux microprocesseurs sont reliés par ladite interface électronique.

Selon l'invention, l'écran est un écran à cristaux liquides qui a une définition de 640 X 400 points et qui est émulé en mode CGA ("Color Graphic Adapter"), les lignes étant doublées en mode superposition, une zone de 640 X 200 points étant émulée en mode CGA pour l'affichage des informations en mode incrustation.

Le microprocesseur d'émulation est relié à une mémoire vidéo vive statique RAM recevant de ce microprocesseur d'émulation les données permettant la visualisation des fonctions de la surface tactile. Le microprocesseur central est relié à une mémoire vidéo vive statique RAM recevant de ce microprocesseur les données permettant l'affichage des informations. Un contrôleur d'écran est relié par un bus d'adresse en parallèle et par un bus de données en parallèle aux deux mémoires vidéo.

Le micro-ordinateur selon l'invention comporte un microprocesseur central à technologie CMOS, et un microprocesseur d'émulation à technologie CMOS. Selon l'invention, le microprocesseur d'émulation est un microprocesseur du type INTEL 80C196, et le microprocesseur central est un microprocesseur du type INTEL 80C186.

Selon l'invention, le micro-ordinateur est de forme globalement parallélépipédique, et l'écran s'étend sur la majeure partie d'une de ses grandes faces.

Le micro-ordinateur selon l'invention comporte une mémoire de masse fixe constituée d'une mémoire vive électronique supplémentaire pouvant servir pour le stockage des données ou au moins pour partie comme extension de la mémoire vive centrale, selon le choix de l'utilisateur.

L'invention propose aussi un micro-ordinateur caractérisé en ce qu'il comporte une mémoire de masse amovible constituée d'une carte électronique amovible comprenant une mémoire vive électronique RAM statique et une source d'énergie électrique de sauvegarde des données mémorisées. En variante, la mémoire de masse amovible est constituée d'une carte électronique amovible comprenant une mémoire électronique à base de composants EPROM FLASH. Selon l'invention, la carte électronique amovible comprend au moins un microprocesseur de gestion des données mémorisées. Selon l'invention, la carte électronique amovible est reliée au micro-ordinateur par une liaison optique, notamment une liaison série infrarouge dont la vitesse peut être choisie entre 9 600bits/s et 375kbits.s. L'invention propose aussi une mémoire de masse amovible pour micro-ordinateur, caractérisée en ce qu'elle est constituée d'une carte électronique amovible à mémoire électronique permanente notamment telle que sus-mentionnée.

L'invention propose aussi un micro-ordinateur, caractérisé en ce qu'il comporte un module de communication par liaison optique infrarouge avec un boîtier de communication déporté qui comprend au moins un port parallèle et au moins un port série pour pouvoir être relié à un périphérique et/ou à un autre micro-ordinateur et/ou à une interface. Ainsi, seul le boîtier de communication déporté est relié au périphérique et/ou à l'autre micro-ordinateur et/ou à l'interface, et le micro-ordinateur selon l'invention communique avec ledit boîtier de communication par liaison optique infrarouge à haut débit. Le module de communication comporte un contrôleur HDLC ("High Level Datalink Control") relié au bus du microprocesseur d'émulation ; et un microséquenceur de synchronisation commandé en séquencement par un signal émis par le boîtier de communication déporté à distance, via la liaison optique infrarouge. L'invention propose aussi un tel boîtier de communication entre un micro-ordinateur et un périphérique et/ou un autre micro-ordinateur, caractérisé en ce qu'il comporte des moyens de communication par liaison optique, et des moyens de connexion électrique, notamment au moins un port série et/ou au moins un port parallèle.

L'invention propose aussi un procédé de mise en communication d'au moins un micro-ordinateur avec au moins un périphérique et/ou un autre micro-ordinateur, caractérisé en ce que l'on connecte le dit périphérique et/ou l'autre micro-ordinateur à un boîtier de communication par liaison optique avec le dit au moins un micro-ordinateur.

Selon l'invention, le micro-ordinateur comporte un carter extérieur totalement étanche. Ainsi, il ne comporte aucun connecteur électrique extérieur, toutes les communications avec l'extérieur étant effectuées par liaison optique infrarouge. Néanmoins, le micro-ordinateur selon l'invention peut comporter un connecteur d'alimentation électrique extérieur, si cela s'avère nécessaire.

Selon l'invention, le micro-ordinateur comporte un boîtier de réception de batteries au cadmium-nickel pour son alimentation électrique.

L'invention propose aussi un micro-ordinateur qui comporte en combinaison tout ou partie des caractéristiques mentionnées ci-dessus, ou encore l'une seulement de ces caractéristiques.

Le micro-ordinateur selon l'invention peut être réalisé sous la forme d'un bloc de format équivalent à celui d'une feuille de papier (format A4 21cm X 29,7cm), d'une épaisseur de l'ordre de 30mm -notamment de 28mm-, pour un poids de l'ordre de 1kg. Il est donc parfaitement portatif. Par ailleurs, du fait de ses caractéristiques, le micro-ordinateur selon l'invention est compatible avec d'autres micro-ordinateurs personnels classiques tels que les IBM-PC (marque déposée). Il peut donc supporter les logiciels et progiciels d'applications développés pour ces micro-ordinateurs. Toutes les mémoires de masse étant du type électronique au silicium, le micro-ordinateur selon l'invention n'incorpore aucune mécanique. De plus, il est parfaitement étanche et peut donc être utilisé en environnement hostile sans précaution particulière.

Par ailleurs, l'écran clavier de grande dimension occupant la totalité d'une face de format A4, de définition 640 X 400 points, tactile, graphique et analogique avec son émulation souris procure une excellente ergonomie et une parfaite convivialité. Bien qu'aucune touche spécifique ne soit nécessaire, le micro-ordinateur selon l'invention comporte avantageusement un interrupteur de mise en service, et quelques touches de fonctions préprogrammées telles que : une touche permettant l'apparition d'une fenêtre pour noter des messages ; une touche permettant la transmission de données selon un mode défini dans un menu de configuration ; une touche permettant de faire apparaître les informations de configuration telles que la taille mémoire encore disponible et la capacité ou l'état de charge des piles ou accumulateurs ; une touche permettant de changer le mode de gestion de l'écran (incrustation ou superposition) ; une touche de réglage de contraste et de luminosité de l'écran ; une touche permettant d'afficher instantanément un clavier numérique.

Les caractéristiques constructives de l'invention permettent d'obtenir un micro-ordinateur extrêmement rapide et performant malgré une taille et un poids très faibles.

Le micro-ordinateur selon l'invention peut dialoguer de façon extrêmement efficace et simple avec un autre micro-ordinateur personnel classique, ou un autre périphérique, ou une interface. Il est donc d'une utilisation extrêmement commode. Enfin, grâce aux caractéristiques constructives de l'invention, le micro-ordinateur possède une autonomie de fonctionnement largement supérieure à une journée lorsque l'on utilise par exemple 4 batteries au cadmium-nickel.

D'autres avantages et caractéristiques de l'invention apparaîtront à la lecture de la description suivante qui se réfère aux figures annexées, et dans lesquelles :

- La figure 1 est une vue générale en perspective d'un mode de réalisation de micro-ordinateur portatif selon l'invention.

- La figure 2 est un schéma synoptique illustrant la structure générale et le fonctionnement d'un micro-ordinateur portatif selon l'invention.

- La figure 3 est un schéma illustrant la structure et le fonctionnement des microprocesseurs central et d'émulation et de leur interface, d'un micro-ordinateur portatif selon l'invention.

- La figure 4a est un schéma illustrant la structure et le fonctionnement des circuits commandant la gestion de l'écran de visualisation d'un micro-ordinateur portatif selon l'invention.

- La figure 4b est un schéma illustrant une variante de la figure 4a.

- La figure 5 est un organigramme illustrant le fonctionnement de la figure 4a.

- La figure 6 est un schéma illustrant la structure et le fonctionnement des liaisons optiques infrarouges d'un micro-ordinateur portatif selon l'invention.

- La figure 7 est une représentation temporelle du signal de séquencement et de synchronisation du module de communication par liaison optique infrarouge d'un micro-ordinateur selon l'invention.

- La figure 8 est un organigramme du programme BIOS ("Basic Input Output System") du microprocesseur d'émulation d'un micro-ordinateur portatif selon l'invention.

L'invention concerne un micro-ordinateur portatif 1. Dans toute la présente demande, le terme "portatif" signifie que le micro-ordinateur peut non seulement être aisément transporté, c'est-à-dire portable, mais également peut être utilisé lorsqu'il est porté par les utilisateurs, de la même façon qu'une simple calculette ou qu'un terminal de saisie d'informations ou d'acquisition de données.

Le micro-ordinateur 1 selon l'invention portatif est destiné à être utilisé aussi bien comme un terminal de saisie d'informations ou d'acquisition de données, que comme un véritable micro-ordinateur personnel interactif, notamment compatible avec d'autres micro-ordinateurs personnels tels que IBM-PC (marque déposée) ou autres, et peut donc exécuter les mêmes programmes d'applications (bureautique, gestion, calcul, ...). Le micro-ordinateur 1 selon l'invention comprend donc au moins un microprocesseur central 2, une mémoire vive centrale 3, un écran de visualisation 4, et une pluralité de périphériques intégrés.

Le microprocesseur central 2 est un microprocesseur à technologie CMOS 16bits du type INTEL 80C186, la mémoire vive centrale est une mémoire RAM statique de 600ko. La carte centrale 5 supportant le microprocesseur central 2 et la mémoire vive centrale 3 comporte également une mémoire PROM 6 de 256ko, une horloge 7, un contrôleur 8 d'accès mémoire direct DMA. La carte centrale 5 fournit, de façon classique, un bus adresse-contrôle 9 et un bus de données 10. Dans le micro-ordinateur portatif représenté sur les figures, la pluralité des périphériques intégrés est constituée notamment d'une mémoire de masse amovible 11, d'une mémoire de masse fixe 12, et d'un circuit d'émulation de souris 13.

Selon l'invention, le micro-ordinateur 1 portatif comporte une surface tactile transparente 14 recouvrant l'écran de visualisation 4, et des moyens 15, 16, 17, 18, 19 électroniques d'émulation variable de l'écran de visualisation 4 et de la surface tactile 14. Ces moyens 15, 16, 17, 18, 19 permettent de gérer toute zone d'écran soit en tant que zone d'affichage d'informations générées par la carte centrale 5, soit en tant que zone de visualisation de fonctions réalisées sur la surface tactile 14. Ces moyens 15, 16, 17, 18, 19 électroniques d'émulation variable sont au moins pour partie reliés à la surface tactile 14 d'une part pour pouvoir être eux-mêmes commandés à partir de cette surface tactile 14 par l'utilisateur, et d'autre part pour gérer l'émulation de cette surface tactile 14, de sorte qu'aucun clavier spécifique n'est nécessaire pour dialoguer avec le micro-ordinateur 1. En effet, selon l'invention, les moyens 15, 16, 17, 18, 19 électroniques d'émulation variable permettent d'émuler la surface tactile 14 selon un clavier dont les fonctions et la forme peuvent être choisies au gré de l'utilisateur préalablement à l'utilisation, et qui peut apparaître sur une partie de l'écran.

Selon l'invention, le microprocesseur central 2 et les moyens 15, 16, 17, 18, 19 électroniques d'émulation variable sont aptes à gérer les zones d'écran selon deux modes possibles, l'utilisateur pouvant choisir à tout instant l'un ou l'autre de ces modes : un mode dit "incrustation" selon lequel l'écran 4 est partagé, au gré de l'utilisateur, en au moins une zone d'affichage d'informations générées par la carte centrale 5, et au moins une zone de visualisation des fonctions réalisées par la surface tactile transparente 14 ; et un mode dit "superposition" selon lequel tout l'écran 4 est utilisé pour l'affichage des informations générées par la carte centrale 5, la visualisation de fonctions réalisées sur la surface tactile 14 pouvant être, au gré de l'utilisateur, superposée à l'affichage des informations générées par la carte centrale 5 qui se trouvent alors masquées par cette visualisation de fonctions.

Selon l'invention, le micro-ordinateur 1 comporte des moyens 20 extérieurs de commande - notamment sous forme d'une touche- des moyens 15, 16, 17, 18, 19 électroniques d'émulation variable permettant de passer d'un mode de gestion de l'écran 4 (incrustation ou superposition) à l'autre à tout instant.

Une telle surface tactile transparente 14 que l'on peut superposer à un écran 4 est déjà connue en soi (voir notamment les demandes de brevets européens EP-A-249 417, EP-A-210 063, EP-A-186 464 et le brevet américain US-A-4 661 655, et le produit commercialisé par la Société ELOGRAPHICS, Tenessee, Etats-Unis sous la dénomination DURATOUCH). Une telle surface tactile transparente 14 fournit un signal électrique permettant de déterminer la position du contact établi par l'utilisateur sur cette surface 14.

Selon l'invention, l'écran 4 est un écran à cristaux liquides qui a une définition de 640 X 400 points. Les moyens 15, 16, 17, 18, 19 électroniques d'émulation variable et le microprocesseur central 2 émulent ce écran 4 en mode CGA ("Color Graphic Adapter"), les lignes étant doublées en mode superposition, et une zone de 640 X 200 points étant émulée en mode CGA pour l'affichage des informations générées par la carte centrale 5 en mode incrustation. Ainsi, en mode incrustation, une moitié de l'écran -notamment la moitié supérieure- est émulée en mode CGA comme un écran classique de 640 X 200 points par le microprocesseur central 2. L'autre moitié de l'écran -notamment la moitié inférieure- est réservée à la visualisation des fonctions réalisées sur la surface tactile de la 14 correspondant à un clavier. Au contraire, en mode superposition, la totalité de l'écran est utilisée pour afficher les informations générées par la carte centrale 5. Comme le microprocesseur central 2 est d'un type classique permettant d'émuler un écran 640 X 200 points, les lignes sont doublées, c'est-à-dire que chaque ligne émulée en mode CGA par le microprocesseur central 2 est affichée sur deux lignes de l'écran 4. Les fonctions réalisées par la surface tactile 14 en mode superposition peuvent néanmoins être visualisées, au gré de l'utilisateur, par superposition de ces fonctions aux informations affichées générées par la carte centrale 5. Ainsi, ces fonctions réalisées sur la surface tactile 14 sont visualisées en priorité, lorsque l'utilisateur le commande, par rapport aux informations en provenance de la carte centrale 5.

Selon l'invention, les moyens 15, 16, 17, 18, 19 électroniques d'émulation variable comportent une carte d'émulation 15 supportant un microprocesseur d'émulation 21 indépendant, dédié à et programmé pour la gestion de l'écran 4 et de la surface tactile 14 selon les choix de l'utilisateur. Les moyens 15, 16, 17, 18, 19 électroniques d'émulation variable comportant également une interface électronique 19 reliant le microprocesseur centrale 2 au microprocesseur d'émulation 21.

Les moyens 15, 16, 17, 18, 19 électroniques d'émulation variable sont aptes à gérer le contact du doigt de l'utilisateur sur la surface tactile 14 à la manière d'une souris. Pour ce faire, la carte d'émulation 15 comporte un circuit 22 de gestion des périphériques permettant notamment l'émulation de la surface tactile 14 en souris 13. De la sorte, le glissement du doigt sur la surface tactile 14 et les contacts ponctuels du doigt sur la surface tactile 14 sont interprétés par le microprocesseur d'émulation 21 de la même façon que le seraient les mouvements et validations du curseur d'une souris.

Selon l'invention, le microprocesseur d'émulation 21 est un microprocesseur à technologie CMOS 16bits du type INTEL 80C196. Ce microprocesseur d'émulation 21 est chargé de toutes les taches nécessaires à la gestion et à l'émulation variable des périphériques, ainsi que de la liaison de ces périphériques avec le microprocesseur central 2. De la sorte, le microprocesseur central 2 est déchargé de ces tâches et voit néanmoins en permanence les périphériques compatibles IBM-PC (marque déposée) nécessaires à son fonctionnement et à celui des programmes DOS et d'application car ces périphériques et leur fonctionnement sont simulés par le microprocesseur d'émulation 21. Grâce à l'interface 19 reliant ces deux microprocesseurs 2, 21, et à la structure générale mentionnée ci-dessus, le micro-ordinateur 1 selon l'invention est extrêmement rapide et performant. Ces microprocesseurs 2, 21 sont cadencés à 12MHz, et leurs BIOS ("Basic Input Output System") sontt adaptés spécifiquement pour permettre l'exécution des fonctions susmentionnées du micro-ordinateur 1. Par exemple, du fait de sa totale compatibilité avec les micro-ordinateurs personnels du type IBM-PC (marque déposée), le microprocesseur central 2 est géré par le système d'exploitation DR-DOS de Digital Research. Le programme d'implantation BIOS du microprocesseur d'émulation 21 est conçu pour permettre l'émulation variable de la surface tactile 14 et de l'écran 4 comme indiqué ci-dessus, l'émulation de la souris sur la surface tactile 14, et la gestion des mémoires de masse 11, 12 et des communications du micro-ordinateur 1 avec l'extérieur. L'utilisation de microprocesseurs à technologie CMOS permet une meilleure intégration et une très faible consommation en électricité, d'où une plus grande autonomie du micro-ordinateur Le programme d'implantation BIOS du microprocesseur d'émulation 21 est aussi conçu pour permettre la communication avec le microprocesseur central 2 via l'interface 19 conçue à cet effet.

Cette interface 19 permet notamment aux microprocesseurs central 2 et d'émulation 21 de gérer à haute vitesse et en mode CGA, selon le mode incrustation ou selon le mode superposition à la fois l'écran 4 et la surface tactile 14 servant de clavier.

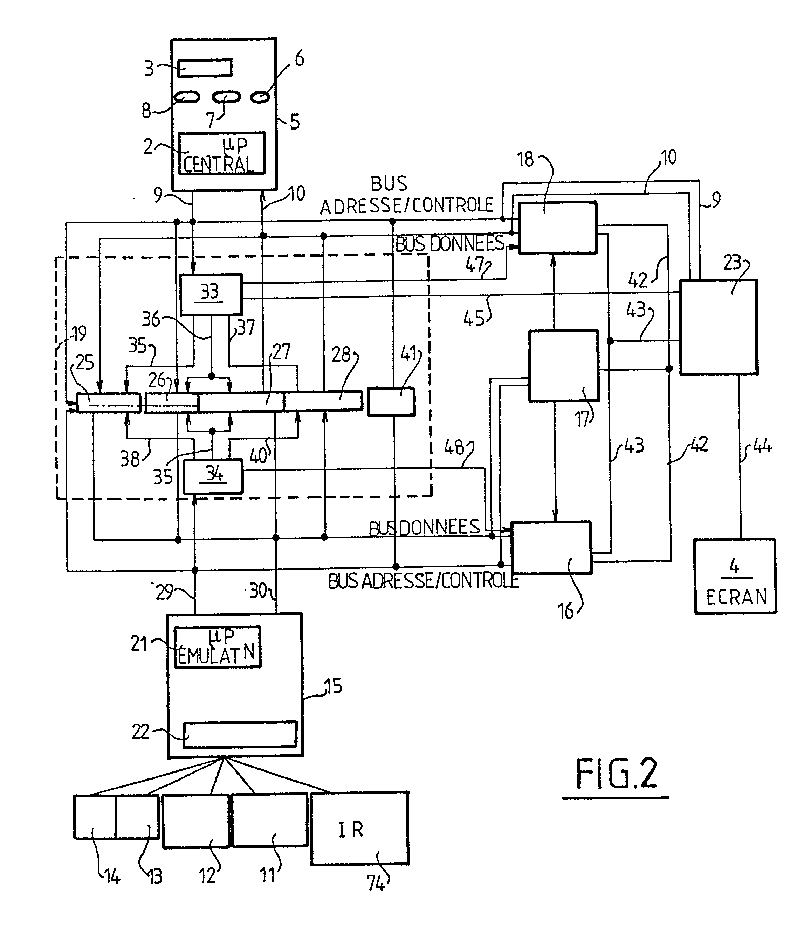

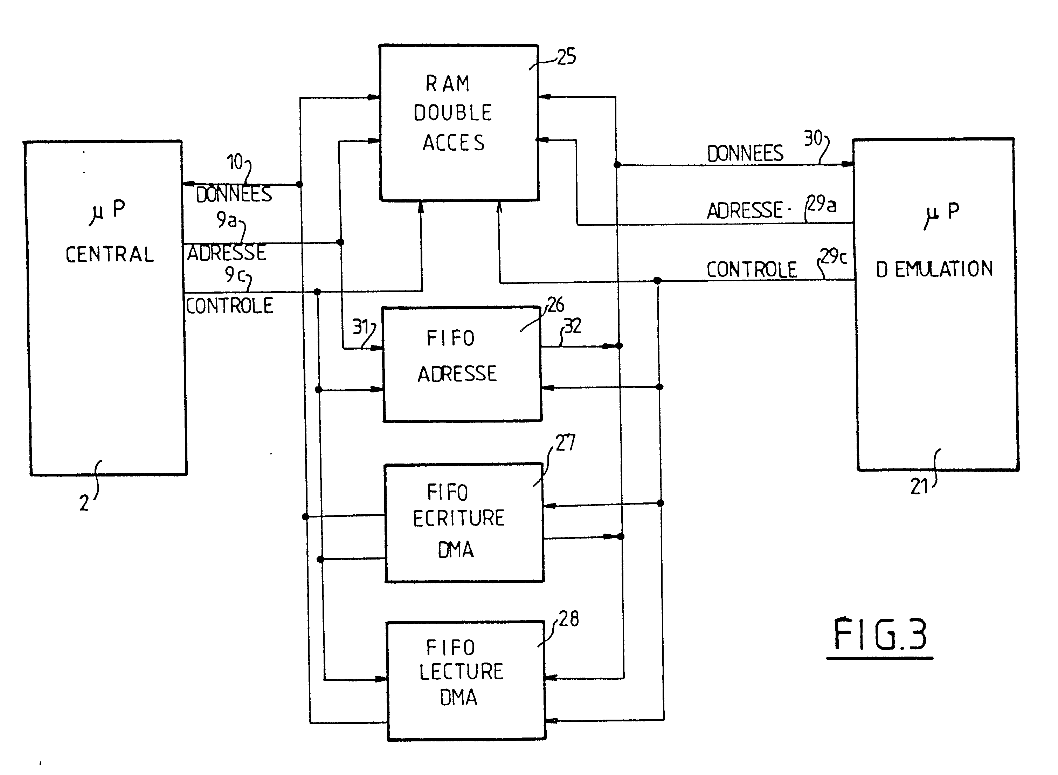

Le microprocesseur d'émulation 21 supporté par la carte d'émulation 15 est relié à un bus d'adresse et de contrôle 29 à un bus de données 30. Les bus d'adresse et de contrôle 9, 29 représentés sur la figure 2 sont représentés séparés en un bus d'adresse 9a, 29a, et un bus de contrôle 9c, 29c sur la figure 3. Sur les figures 2 et 3 les croisements correspondant à des connexions effectives entre bus ou liaisons électriques sont représentés par des pavés carrés. Les autres croisements ne correspondent pas à des liaisons effectives.

Selon l'invention, l'interface 19 comprend une mémoire vive statique RAM à double accès 25 reliée aux bus de données 10, 30 et d'adresse 9a, 29a de chacun des microprocesseurs central 2 et d'émulation 21 ; une mémoire FIFO d'adresse 26 dont l'entrée 31 est reliée au bus d'adresse 9a du microprocesseur central 2, et dont la sortie 32 est reliée au bus de données 30 du microprocesseur d'émulation 21 ; une mémoire FIFO d'écriture 27 permettant de transférer les données par blocs en mode DMA du bus de données 10 du microprocesseur central 2 sur le bus de données 30 du microprocesseur d'émulation 21, la mémoire FIFO d'écriture 27 étant reliée à ces bus de données 10, 30 ; une mémoire FIFO de lecture 28 permettant de transférer les données par blocs du bus de données 30 du microprocesseur d'émulation 21 sur le bus de données 10 du microprocesseur 2 central, la mémoire FIFO de lecture 28 étant reliée à ces bus 10, 30. Sur la figure 3, on a représenté les bus de données 10, 30, d'adresse 9a, 29a et de contrôle 9c, 29c directement reliés aux microprocesseurs central 2 et d'émulation 21. Néanmoins, en pratique, la liaison de ces bus 10, 30, 9a, 29a, 9c, 29c aux microprocesseurs 2, 21 est effectuée comme indiquée sur la figure 2 via les cartes centrale 5 et d'émulation 15 et des circuits de décodage des adresses en entrée-sortie 33, 34. Le circuit de décodage d'adresse 33 est relié à la carte centrale 5 via le bus 9 d'adresse et de contrôle et émet des signaux de contrôle 35, 36, 37 sur la mémoire RAM 25 à double accès, la mémoire FIFO d'adresse 26, la mémoire FIFO d'écriture 27 et la mémoire FIFO d'écriture 28. Le signal 35 émis sur la mémoire RAM à double accès 25 par le circuit de décodage 33 est un signal de sélection de cette mémoire 25. Le signal 36 est émis par ledit circuit de décodage 33 simultanément sur la mémoire FIFO d'adresse 26 et sur la mémoire FIFO d'écriture 27 et correspond à un signal d'écriture sur ces mémoires FIFO. Le signal 37 émis sur la mémoire FIFO de lecture 28 est un signal commandant la lecture de cette mémoire FIFO de lecture 28. De façon similaire, le circuit de décodage d'adresse entrée-sortie 34 est relié à la carte d'émulation 15 via le bus 29 d'adresse et de contrôle et émet des signaux 38, 39, 40 vers la mémoire RAM à double accès 25, la mémoire FIFO d'adresse 26, la mémoire FIFO d'écriture 27, et la mémoire FIFO de lecture 28. le signal 38 émis par le circuit de décodage 34 sur la mémoire RAM à double accès 25 est un signal de sélection de cette mémoire 25. Le signal 39 est émis simultanément par le circuit de décodage 34 sur la mémoire FIFO d'adresse 26 et sur la mémoire FIFO d'écriture 27 et est un signal de lecture de ces FIFO. Le signal 40 émis sur la mémoire FIFO de lecture 28 est un signal d'écriture de cette FIFO.

L'interface 19 comprend en outre un contrôleur de gestion des interruptions 41 reliant les deux bus d'adresse et contrôle 9, 29 des microprocesseurs central 2 et d'émulation 21, et permettant l'émulation de remise à zéro d'interruptions générées préalablement par le microprocesseur d'émulation dans les mêmes conditions que si ces interruptions avaient été générées par les périphériques émulés.

La mémoire FIFO d'adresse 26 permet au microprocesseur d'émulation 21 de connaître les requêtes du microprocesseur central 2 sur le périphériques concernés par l'émulation. Avec la valeur inscrite simultanément dans cette mémoire FIFO d'adresse 26 et dans la mémoire RAM à double accès 25, le microprocesseur d'émulation est averti des requêtes du microprocesseur central 2, et peut interpréter la donnée présente dans la mémoire RAM à double accès 25 correctement. Ainsi, la mémoire RAM à double accès 25 permet de transmettre des caractères de contrôle entre le microprocesseur central 2 et le microprocesseur d'émulation 21 et réciproquement. En particulier, cette mémoire RAM à double accès 25 permet de renvoyer au microprocesseur central 2 les données demandées par ce dernier en mode "caractère" et permet au microprocesseur central 2 de voir ses demandes de lecture aux adresses compatibles avec ce qui est fait dans les micro-ordinateurs personnels classiques tels que des IMB-PC XT (marque déposée), comme si les périphériques émulés existaient réellement et étaient parfaitement compatibles.

Les mémoires FIFO d'écriture 27 et de lecture 28 permettent le transfert des données en mode DMA par blocs en écriture ou en lecture par le microprocesseur central 2.

L'interface 19 permet donc de synchroniser les fonctionnements des deux microprocesseurs central 2 et d'émulation 21, et permet au microprocesseur d'émulation 21 d'effectuer la traduction des adresses entre le microprocesseur central 2 et les périphériques. Grâce à la mémoire RAM à double accès 25 et à la mémoire FIFO d'adresse 26 on établit donc une liaison et la transmission des instructions de contrôle, entre les deux microprocesseurs 2, 21. Par ailleurs, les mémoires FIFO 26, 27, 28 ont une capacité de 512 octets correspondant à un secteur. De la sorte, les opérations de lecture et d'écriture de ces mémoires par l'un des microprocesseurs ne sont pas nécessairement synchronisées avec les opérations correspondantes d'écriture et de lecture devant être effectuées par l'autre microprocesseur.

Selon l'invention, le microprocesseur d'émulation 21 est relié par ses bus d'adresse et de contrôle 29 et de données 30 à une mémoire vidéo 16 vive statique du type RAM recevant de ce microprocesseur 21 les données permettant la visualisation des fonctions de la surface tactile 14. Ainsi, cette visualisation des fonctions de la surface tactile 14 est commandée par le microprocesseur d'émulation 21 via la mémoire vidéo 16 qui lui est associée. De même, le microprocesseur central 2 est relié par ses bus d'adresse et de contrôle 9 et de données 10 à une mémoire vidéo 18 vive statique du type RAM recevant de ce microprocesseur central 2 les données permettant l'affichage des informations générées par la carte centrale 5. Ainsi, cet affichage des informations générées par la carte centrale 5 est commandé par le microprocesseur central 2 par l'intermédiaire de la mémoire vidéo 18 qui lui est associée. Le micro-ordinateur 1 selon l'invention comporte en outre un contrôleur d'écran 23 qui est relié aux deux mémoires vidéo 16, 18 d'une part par un bus d'adresse 42 relié en parallèle à ces deux mémoires vidéo 16, 18, et d'autre part par un bus de données 43. également relié en parallèle aux deux mémoires vidéo 16. 18. Le contrôleur d'écran 23 est aussi relié à l'écran 4 via un bus 44, et en commande le fonctionnement. Le contrôleur d'écran 23 est un contrôleur d'écran à cristaux liquides. Il est également relié directement aux bus d'adresse et de contrôle 9 et de données 10 du microprocesseur central 2, ainsi qu'au circuit 33 de décodage d'adresse d'entrée-sortie qui lui fournit un signal de contrôle 45. De la sorte, le contrôleur d'écran 23 est commandé en mode incrustation ou en mode superposition par le microprocesseur central 2 qui commande le contrôleur d'écran 23 en mode CGA pour l'affichage des informations générées par la carte centrale 5. En mode incrustation, le microprocesseur 2 commande le contrôleur d'écran 23 pour un affichage sur une zone de 640 X 200 points, notamment le demi-écran supérieur. En mode superposition, le microprocesseur central 2 commande le contrôleur d'écran 23 pour un affichage en mode CGA sur 640 X 200 points, mais en doublant chaque ligne à afficher.

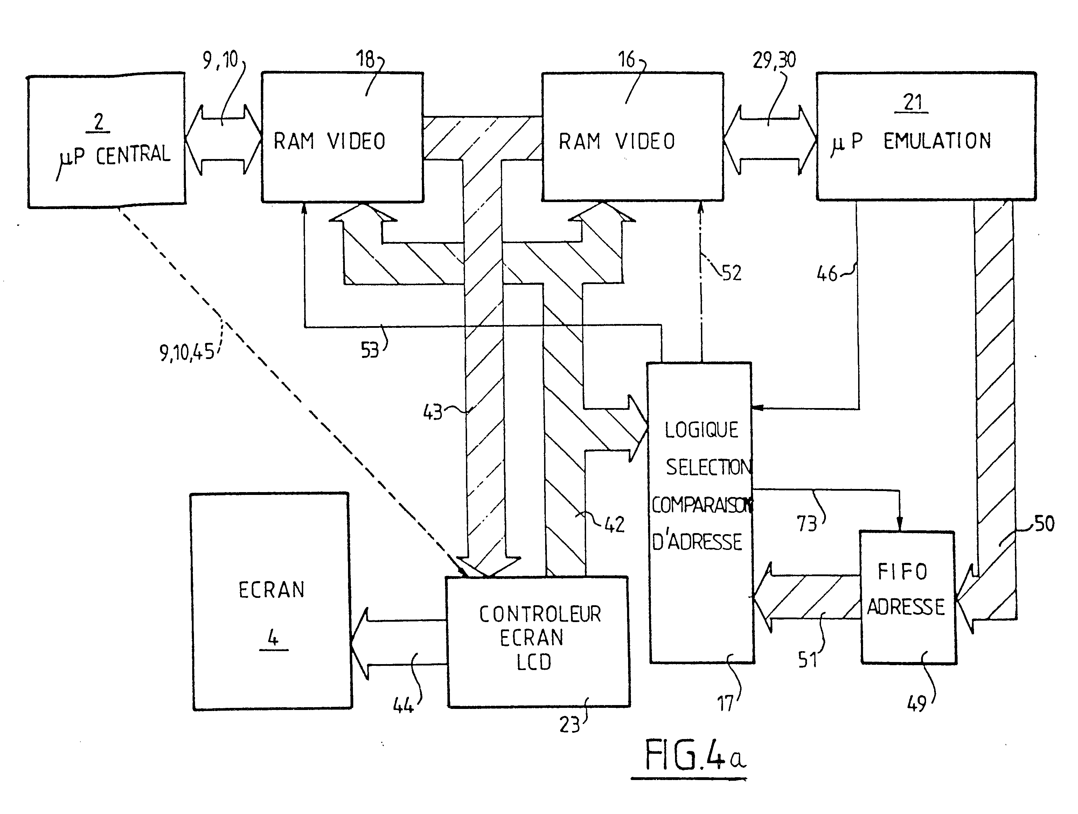

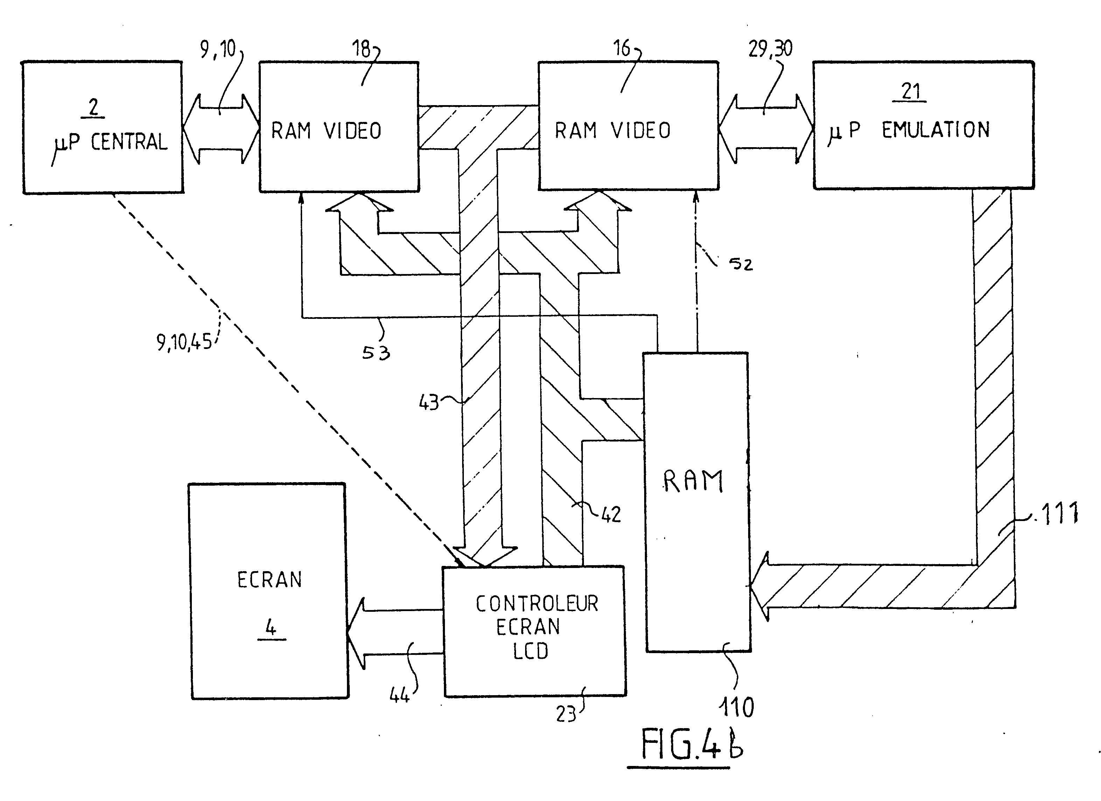

Le transfert des données sur le bus de données 43 du contrôleur d'écran 23 à partir de l'une ou l'autre des mémoire vidéo 16, 18 est sélectionné par un circuit logique 17. Le bus d'adresse 42 du contrôleur d'écran 23 est relié à ce circuit logique 17. Par ailleurs, le microprocesseur d'émulation 21 émet sur ce circuit logique 17 un signal de contrôle 46 (figure 4) pour commander ce circuit logique 17 selon le mode incrustation ou selon le mode superposition qui a été choisi, et ce de façon concordante avec le mode de gestion du contrôleur d'écran 23 par le microprocesseur central 2. Ainsi, en mode superposition, le circuit logique 17 commande la lecture des RAM vidéo 16, 18 par le contrôleur d'écran 23 en doublant les lignes. Au contraire, en mode incrustation, le circuit logique 17 ne double pas la lecture des mémoires vidéo 16, 18 par le contrôleur d'écran 23.

Le contrôleur d'écran 23 génère une trame de rafraîchissement, puis successivement les différentes adresses correspondant aux positions à afficher sur l'écran 4 sur son bus d'adresse 42. Pour chaque adresse présentée, correspondant à une position sur l'écran 4, le circuit logique 17 sélectionne l'émission sur le bus de données 43 de l'information à afficher, soit par la mémoire vidéo 6 reliée au microprocesseur d'émulation 21, soit par la mémoire vidéo 18 reliée au microprocesseur central 2. La mémoire vidéo 18 reliée au microprocesseur central 2 reçoit aussi un signal de contrôle 47 du circuit 33 de décodage d'adresse d'entrée-sortie associé au microprocesseur central 2 (figure 2). De même, la mémoire vidéo 16 reliée au microprocesseur d'émulation 21 reçoit un signal de contrôle 48 du circuit 34 de décodage d'adresse d'entrée-sortie associé à ce microprocesseur d'émulation 21.

Aussi bien en mode incrustation qu'en mode superposition, l'utilisateur peut contrôler les images apparaissant sur l'écran 4, et notamment faire apparaître une ou plusieurs fenêtres de visualisation de fonctions, ou à usage personnel, en toute zone de l'écran 4. Même en mode incrustation, l'utilisateur peut faire apparaître une telle fenêtre en superposition à la zone réservée à l'affichage des informations générées par la carte centrale 5. Ainsi, l'utilisateur a un contrôle total des images qui peuvent apparaître sur l'écran, et ce indépendamment du logiciel en cours d'exécution sur le microprocesseur central 2. En effet, la mémoire vidéo 16 associée au microprocesseur d'émulation 21 comporte les données correspondant aux fonctions du type clavier réalisées sur la surface tactile 14, ou aux fenêtres à usage de l'utilisateur. Au contraire, la mémoire vidéo 18 associée au microprocesseur central 2 ne comporte que les données correspondant à l'affichage des informations générées par la carte centrale 5 selon les programmes en cours sur le microprocesseur central 2. Le circuit logique 17 permet donc d'émettre sur le bus de données 43 du contrôleur d'écran 23, et ce de façon transparente pour ce contrôleur 23, soit les données en provenance de la mémoire vidéo 18 associée au microprocesseur central 2, soit les données en provenance de la mémoire vidéo 16 associée au microprocesseur d'émulation 21. De plus, le microprocesseur d'émulation 21 commande ce circuit logique 17 de façon à imposer l'affichage des fenêtres au gré de l'utilisateur sur l'écran 4.

Pour ce faire (figure 4a), le micro-ordinateur 1, selon l'invention, comporte une mémoire FIFO d'adresse 49 reliée par un bus d'adresse 50 au microprocesseur d'émulation 21. Ce microprocesseur d'émulation 21 fournit à la mémoire FIFO 49 les adresses calculées et décodées correspondant aux frontières de l'écran 4 entre les zones d'affichage d'informations et les zones de visualisation de fonctions ou de fenêtres, et ce dans l'ordre dans lequel ces adresses sont générées par le contrôleur d'écran 23 sur son bus d'adresse 42. La mémoire FIFO d'adresse 49 est reliée au circuit logique 17 par un bus d'adresse 51. La mémoire FIFO d'adresse 49 reçoit du circuit logique 17 un signal de contrôle 73 déclenchant le changement de la valeur présente dans cette mémoire 49 après chaque égalité constatée entre l'adresse présente sur le bus 51 en provenance de cette mémoire 49 et l'adresse présente sur le bus 42 en provenance du contrôleur d'écran 23. Ainsi, le circuit logique 17 est un circuit comparateur relié au bus 42 du contrôleur d'écran 23 et à ladite mémoire FIFO d'adresse 49, et émet un signal de contrôle 52, 53 vers chaque mémoire vidéo 16, 18 associée respectivement à chaque microprocesseur 2, 21 pour commander la lecture de données par le contrôleur d'écran 23 via le bus de données 43 dans l'une ou l'autre de ces mémoires vidéo 16, 18, en fonction de la comparaison d'adresse effectuée entre l'adresse présente sur le bus d'adresse 42 du contrôleur d'écran 23 et celle présente sur le bus d'adresse 51 en provenance de la mémoire FIFO d'adresse 49. Les signaux de contrôle 52, 53 sont émis en fonction du mode d'émulation d'écran (incrustation ou superposition) choisi par l'utilisateur sur l'un ou l'autre des registres d'émission des mémoires vidéo 16, 18 sur le bus de données 43 du contrôleur d'écran 23. Les signaux de contrôle 52, 53 permettent d'inhiber et de valider, respectivement, les émetteurs de bus des mémoires vidéo 16, 18 reliés au bus de données 43 du contrôleur d'écran 23.

Les adresses des frontières des fenêtres à dédier au microprocesseur d'émulation 21 ou à superposer aux informations en provenance de la carte centrale 5 sont calculées et générées sur la mémoire FIFO d'adresse 49 par le microprocesseur d'émulation 21 lui-même, indépendamment de la gestion des mémoires vidéo 16, 18, notamment de la mémoire vidéo 18 associée au microprocesseur central 2. De la sorte, l'utilisateur peut ouvrir plusieurs fenêtres de dimensions variables (à usage personnel ou pour visualiser les fonctions de la surface 14) et peut placer ces fenêtres n'importe où sur l'écran, et ce de façon totalement indépendante du fonctionnement du logiciel en cours sur le microprocesseur central 2. Le nombre de fenêtres et leurs dimensions, notamment en hauteur, que l'utilisateur peut ainsi ouvrir ne dépend que de la capacité en mémoire de la mémoire FIFO d'adresse 49 qui est utilisée.

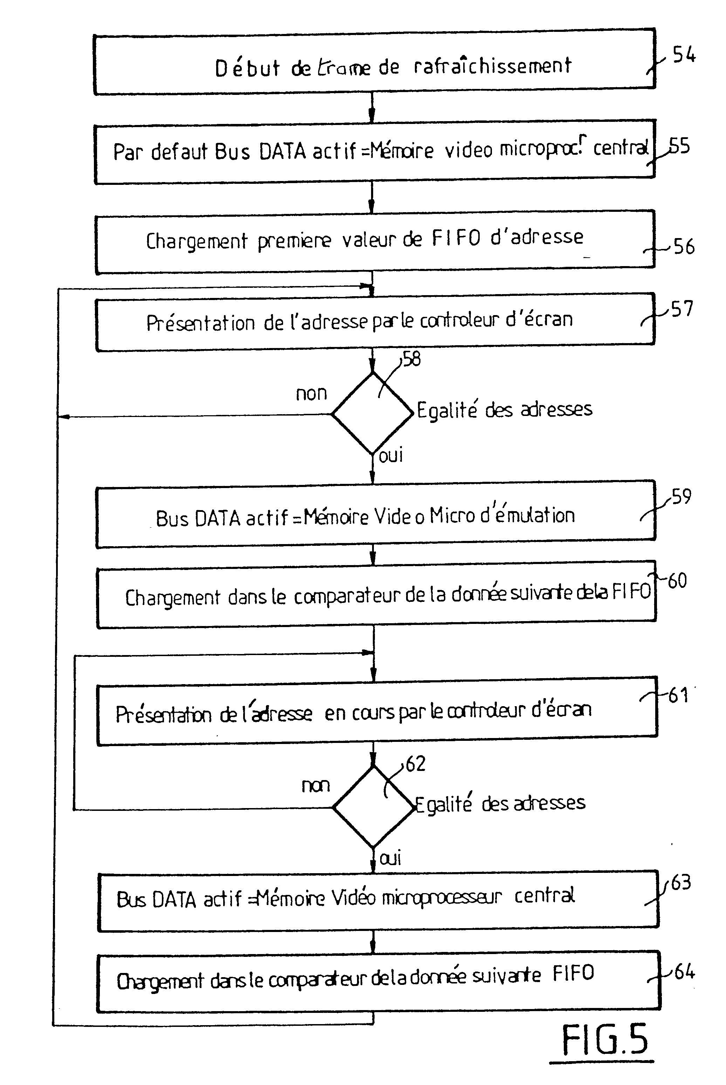

Le procédé de fonctionnement de ces circuits commandant la gestion de l'écran 4 de visualisation est illustré sur l'organigramme de la figure 5. Ce procédé s'effectue à chaque trame de rafraichissement dont le début est matérialisé par l'étape 54. Par défaut, le circuit logique 17 émet le signal de contrôle 53 vers la mémoire vidéo 18 du microprocesseur central 2 pour commander la lecture de cette mémoire vidéo 18 par le contrôleur d'écran 23, ce qui est schématisé par l'étape 55. Tel est le cas au début de chaque trame de rafraîchissement, et lorsque le microprocesseur d'émulation 21 n'émet aucune valeur dans la mémoire FIFO d'adresse 49, c'est-à-dire lorsque l'utilisateur ne souhaite pas afficher des zones de visualisation de fonctions ou des fenêtres à usage personnel sur l'écran 4. Si au contraire l'utilisateur commande l'affichage d'une fenêtre sur l'écran 4, le microprocesseur d'émulation 21 charge préalablement toutes les adresses de frontière dans la mémoire FIFO d'adresse 49 correspondant à cette fenêtre. Le signal de début de TRAME déclenche alors l'apparition de la première adresse contenue dans la mémoire FIFO sur le comparateur d'adresse 17.

En supposant que le contrôleur d'écran 23 génère les adresses successivement correspondant aux positions sur l'écran de gauche à droite et de haut en bas, ligne par ligne, la première valeur d'adresse chargée dans la mémoire FIFO d'adresse 49 est celle qui correspond au coin supérieur gauche de ladite fenêtre à visualiser. Les adresses chargées dans la mémoire FIFO d'adresse 49 par le microprocesseur d'émulation 21 successivement seront chronologiquement les suivantes :
- coin supérieur gauche : première ligne, première colonne de la fenêtre,
- première ligne, dernière colonne de la fenêtre,
- deuxième ligne, première colonne de la fenêtre,
- deuxième ligne, dernière colonne de la fenêtre,
- troisième ligne, première colonne de la fenêtre,
- troisième ligne, dernière colonne de la fenêtre,
- ...,
- ...,
- dernière ligne, première colonne de la fenêtre (coin inférieur gauche),
- dernière ligne, dernière colonne de la fenêtre (coin inférieur droit).

Ces adresses correspondent donc aux colonnes matérialisant la frontière entre la zone d'écran réservée éventuellement à l'affichage des informations générées par la carte centrale 5, et la fenêtre générée par le microprocesseur d'émulation 21, au gré de l'utilisateur.

Lorsque le contrôleur d'écran 23 génère les adresses des positions de l'écran 4, ces adresses sont présentées successivement par le contrôleur d'écran 23 sur le circuit logique 17, ce qui est matérialisé par l'étape 57 de la figure 5. Le circuit logique 17 effectue alors, pour chaque adresse présentée par le contrôleur d'écran 23, la comparaison en 58 entre l'adresse présentée par le contrôleur d'écran 23 et l'adresse présentée sur le comparateur à partir de la mémoire FIFO d'adresse 49. Si ces adresses ne sont pas égales, rien n'est changé, et le circuit logique 17 continue à émettre le signal de contrôle 53 à destination de la mémoire vidéo 18 associée au microprocesseur central 2. Si au contraire les adresses sont égales, le circuit logique 17 inhibe le signal de contrôle 53 et émet au contraire le signal de contrôle 52 à destination de la mémoire vidéo 16 associé au microprocesseur d'émulation 21, ce qui déclenche la lecture par le contrôleur d'écran 23 des valeurs présentes sur cette mémoire vidéo 16, et est représenté par l'étape 59. Dans un tel cas, le circuit logique 17 émet également un signal de contrôle 73 à destination de la mémoire FIFO d'adresse 49 pour déclencher le chargement à partir de la mémoire FIFO d'adresse 49 de la prochaine adresse de comparaison, laquelle est alors présentée sur le comparateur. Jusqu'à la prochaine égalité d'adresse, c'est-à-dire jusqu'à la prochaine frontière de la fenêtre, l'état des signaux 52, 53 de contrôle des mémoires vidéo 16, 18 n'est pas modifié par le circuit logique 17. En l'occurrence, toutes les données présentées au contrôleur d'écran 23 sur son bus de données 43 jusqu'à la prochaine égalité des adresses seront des données en provenance de la mémoire vidéo 16 associée au microprocesseur d'émulation 21. Le chargement de la nouvelle valeur dans la mémoire FIFO d'adresse 49 par le signal 73 est matérialisé par l'étape 60 sur la figure 5. l'étape 61 correspond à la présentation suivante de l'adresse sur le bus 42 par le contrôleur d'écran 23 à destination du circuit logique 17. Ce circuit logique 17 effectue la comparaison en 62 entre les adresses présentées successivement et la nouvelle valeur présente sur le comparateur correspondant à la prochaine frontière. Tant que le contrôleur d'écran 23 n'a pas atteint cette nouvelle valeur, rien n'est changé, il continue à lire la mémoire vidéo 16 associée au microprocesseur d'émulation 21 sous l'effet du signal de contrôle 52 successivement, et donc à afficher la portion de ligne correspondant à la fenêtre à visualiser. Au contraire, dès que l'adresse présentée par le contrôleur d'écran 23 sur son bus 42 à destination du circuit logique 17 correspond à la frontière de droite et est égale à la valeur présente dans la mémoire d'adresse 49, le circuit logique 17 modifie l'état des signaux 52, 53, en inhibant le signal 52, et en émettant le signal 53 déclenchant la lecture de la mémoire vidéo 18 associée au microprocesseur central 2 par le contrôleur d'écran 23, selon l'étape 63 de la figure 5. Puis, le signal de contrôle 73 est à nouveau émis pour charger la valeur suivante à partir de la mémoire FIFO d'adresse 49. La valeur correspondant à la frontière de gauche de la ligne suivante de la fenêtre est alors enregistrée dans cette mémoire FIFO d'adresse 49, selon l'étape 64 de la figure 5. Le processus est alors repris entre les étapes 56 et 57 de sorte que le contrôleur d'écran 23 affiche les informations de la mémoire vidéo 18 associée au microprocesseur central 2 jusqu'à la prochaine égalité d'adresse, c'est-à-dire jusqu'à la prochaine frontière de gauche définie par la valeur présente dans la mémoire FIFO d'adresse 49.

Ce procédé permet aux deux microprocesseurs 2, 21 de se partager en temps réel un espace d'affichage propre sur le même écran 4. Le microprocesseur central 2 émet sur la mémoire vidéo 18 en mode CGA de 640 X 200 points. Le procédé adopté et décrit ci-dessus permet au microprocesseur d'émulation 21 de créer son propre espace d'affichage en taille, position et nombre de fenêtres vidéo indépendamment de l'application en cours sur le microprocesseur central 2 et ce de façon extrêmement rapide.

Une variante de réalisation est illustrée sur la figure 4b. Dans cette variante, le micro-ordinateur selon l'invention comporte une mémoire RAM 110 reliée au microprocesseur d'émulation 21 qui lui fournit les valeurs d'identification de chaque octet devant être affiché sur l'écran 4. Cette valeur d'identification permet au contrôleur d'écran 23 de savoir dans quelle mémoire vidéo 16, 18 il doit aller chercher l'information à afficher. Ainsi, chaque adresse émise par le contrôleur d'écran 23 est présentée sur cette mémoire RAM 110, laquelle émet alors les bits de données d'identification agissant alors comme un signal de contrôle 52, 53 vers chaque mémoire vidéo 16, 18 pour commander la lecture des données par le contrôleur d'écran 23 dans l'une ou l'autre de ces mémoires vidéo 16, 18.

La mémoire RAM 100 est reliée au microprocesseur d'émulation 21 par un bus d'adresse 111. La mémoire RAM 110 est reliée au bus d'adresse 42 du contrôleur d'écran 23.

Selon l'invention, le micro-ordinateur 1 comporte une mémoire de masse fixe 12 constituée d'une mémoire vive électronique RAM statique supplémentaire pouvant servir pour le stockage des données de façon similaire à un disque dur. De telles mémoires de masses fixes électroniques sont aussi appelées disques durs silicium par abus de langage. Cette mémoire de masse fixe 12 est utilisée par le microprocesseur central 2 via le microprocesseur d'émulation 21 et l'interface 19. Selon l'invention, cette mémoire de masse fixe 12 est avantageusement constituée de RAM statiques dont la capacité est comprise entre 2 et 6 mégabytes. Selon l'invention, cette mémoire de masse fixe 12 peut être configurée au moins pour partie comme une extension de la mémoire vive centrale 2. En effet, pour certaines applications (par exemple le logiciel LOTUS 1, 2, 3, marque déposée, de la Société MICROSOFT), il est nécessaire de pouvoir disposer ponctuellement d'une extension de mémoire centrale. La présence de cette mémoire de masse fixe 12 de même type que la mémoire centrale 2 (RAM statique) permet d'effectuer cette extension mémoire par simple configuration du micro-ordinateur 1.

Un micro-ordinateur selon l'invention est caractérisé en ce qu'il comporte une mémoire de masse amovible 11 constituée d'une carte électronique amovible comprenant une mémoire vive électronique 65 RAM statique et une source d'énergie électrique 66 de sauvegarde des données mémorisées. En variante, afin d'éviter la présence d'une telle source d'énergie électrique pour alimenter la mémoire vive électronique RAM statique de cette carte électronique, la mémoire de masse amovible 11 selon l'invention peut être constituée d'une carte électronique amovible comprenant une mémoire électronique à base de composants du type EPROM FLASH. De tels composants, nouvellement mis sur le marché, permettent de mémoriser les données sans nécessité de source électrique de sauvegarde, et ont une rapidité suffisante pour pouvoir servir à titre de mémoire de masse.

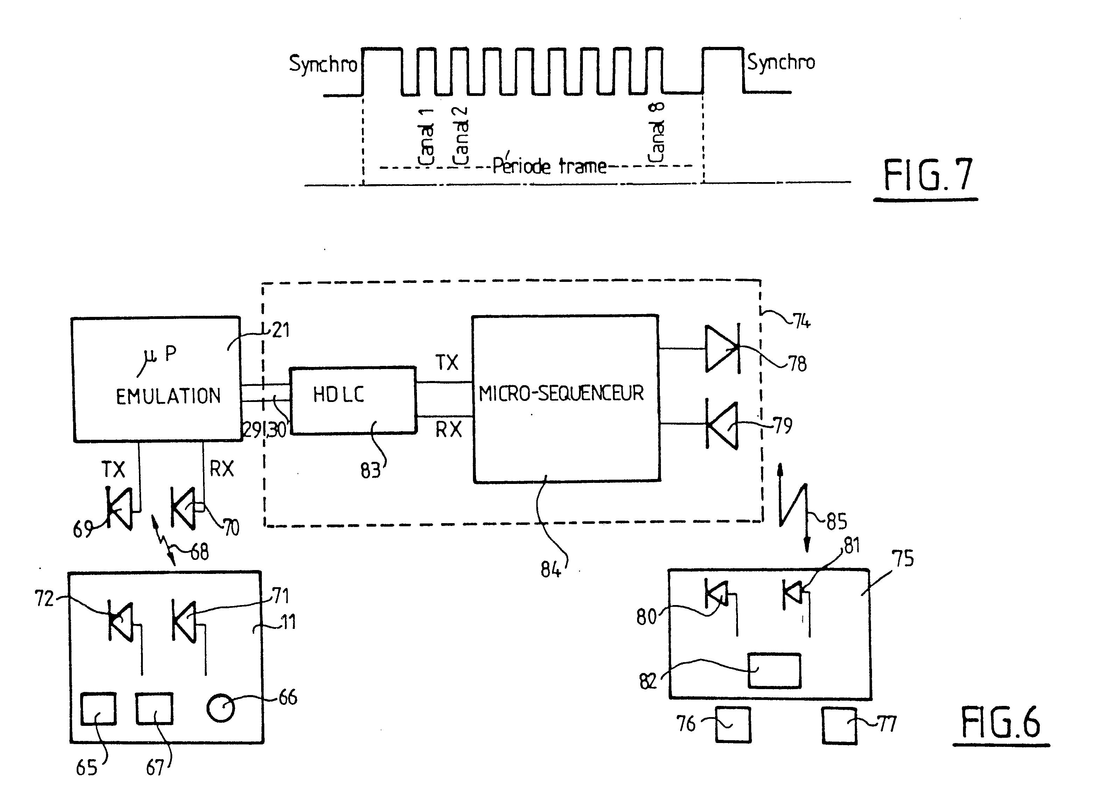

Selon l'invention, la carte électronique amovible 11 constituant la mémoire de masse amovible comprend au moins un microprocesseur 67 de gestion des données mémorisées. Dans le mode de réalisation représenté, cette carte électronique amovible 11 est constituée d'une carte au format conforme aux normes ISO du type format bancaire, et comporte donc une mémoire vive électronique 65, une source d'énergie électrique 66 indépendante lorsque cette mémoire est du type RAM, et un microprocesseur 67 de gestion des données mémorisées. La présence de ce microprocesseur 67 permet de gérer les données sauvegardées, d'offrir la possibilité d'introduire des codes autocorrecteurs d'erreurs au niveau des bits mémorisés, et une meilleure gestion de la liaison série infrarouge 68 décrite ci-après. En effet, selon l'invention, la carte électronique amovible 11 est reliée au micro-ordinateur 1 par une liaison optique 68 qui est une liaison série infrarouge dont la vitesse peut être choisie entre 9 600bits/s et 375kbits/s. Pour ce faire, le circuit 22 de gestion des périphériques de la carte d'émulation 15 comporte une photodiode d'émission 69 et une photodiode de réception 70 (figure 6). De même, la carte électronique amovible 11 comporte une photodiode d'émission 71 et une photodiode de réception 72. La liaison optique infrarouge série est gérée par le microprocesseur 67 de la carte électronique 11. Cette liaison optique infrarouge permet d'éviter la présence de connecteurs électriques entre la carte électronique amovible 11 et le boîtier du micro-ordinateur 1. En effet, un tel connecteur électrique nécessiterait un grand nombre de plots, et serait donc à la fois volumineux et peu fiable dans un environnement hostile. En pratique, la carte 11 comporte deux plots de connexion électrique avec le micro-ordinateur : pour son alimentation en électricité.

Par ailleurs, un micro-ordinateur 1 selon l'invention est caractérisé en ce qu'il comporte un module de communication 74 par liaison optique infrarouge 85 avec un boîtier de communication déporté 75. Le boîtier de communication déporté 75 comprend au moins un port parallèle 76 et au moins un port série 77, de sorte qu'il peut être relié à un périphérique et/ou à un autre micro-ordinateur et/ou à une interface. Le module de communication 74 qui communique par liaison optique infrarouge 85 avec le boîtier de communication déporté 75, fait partie intégrante du circuit 22 de gestion des périphériques de la carte d'émulation 15.

Le module de communication 74 comporte une diode d'émission 78 et une diode de réception 79. De façon similaire, le boîtier de communication déporté 75 comporte une diode d'émission 80 et une diode de réception 81. Le boîtier de communication déporté 75 comporte un circuit 82 émettant un signal de synchronisation représenté sur la figure 7. La période TRAME de plus grande valeur de ce signal de synchronisation est variable et correspond à la vitesse de transmission prédéfinie sur la liaison infrarouge 85. Le boîtier de communication déporté 75 émet le signal de synchronisation représenté à la figure 7 à la destination du module de communication 74. Le module de communication 74 comporte un contrôleur HDLC ("High Level Data Link Control") 83 relié aux bus d'adresse et de contrôle 29 et de données 30 du microprocesseur d'émulation 21. Le module de communication 74 comporte en outre un microséquenceur 84 de synchronisation commandé en séquencement par le signal émis par le circuit 82 du boîtier de communication 75 placé à distance, via la liaison optique infrarouge 85. Le contrôleur HDLC 83 transforme les informations en provenance du microprocesseur d'émulation 21 en signaux exploitables sur la liaison infrarouge 85 au microséquenceur 84 qui synchronise l'émission et la réception de ces signaux à destination du boîtier de communication déporté 75 sur un canal de temps d'émission-réception approprié. Le microséquenceur 84 est donc relié aux diodes d'émission 78 et de réception 79 du module de communication 74 du micro-ordinateur 1 selon l'invention.

Le fonctionnement de cette liaison optique infrarouge 85 est le suivant.

Lorsque le microprocesseur d'émulation 21 souhaite communiquer avec un périphérique extérieur, le circuit 82 émet un signal de synchronisation à destination du microséquenceur 84, via la liaison infrarouge 85, qui est un signal carré dont la période TRAME correspond à ladite vitesse de transmission. Le signal de synchronisation (figure 7) comporte également une série de signaux carrés à une plus haute fréquence correspondant au nombre de micro-ordinateurs 1 pouvant se connecter au boîtier de communication 75, c'est-à-dire au nombre de canaux que le boîtier de communication 75 peut gérer. Dans l'exemple représenté, le signal de synchronisation est partagé en huit canaux.

En fonction de ce signal émis par le boîtier de communication 75, le microséquenceur 84 de chaque micro-ordinateur 1 qui souhaite communiquer avec ce boîtier 75 se synchronise sur ledit signal pour émettre ou recevoir les signaux sur la liaison infrarouge 85 pendant le temps qui correspond au canal qui lui est alloué. Un des canaux du signal de synchronisation -notamment le canal 8- est réservé pour permettre au microséquenceur 84 de trouver un canal libre et de se réserver ce canal. Ainsi, en fonction des informations reçues par le canal 8, le microséquenceur 84 pourra savoir s'il existe un canal libre, et si oui lequel. Après détermination du canal libre, le microséquenceur 84 émet un signal d'allocation de ce canal, et se synchronise sur ce canal. Ensuite, le microséquenceur 84 met en forme le signal en provenance du contrôleur HDLC 83 de façon à n'émettre que pendant l'intervalle de temps alloué correspondant à ce canal, et réciproquement réceptionne pendant cet intervalle les signaux en provenance de la diode de réception 79 et les transforme en signaux exploitables par le contrôleur HDLC 83.

De la sorte, on peut gérer un accès multicanaux au boîtier de communication 75 déporté. Dans l'exemple représenté sur la figure 7 où le signal de synchronisation comporte huit canaux, on peut ainsi gérer sept accès simultanés au boîtier de communication 75, et donc à ses ports 76, 77 de liaison avec les périphériques extérieurs.

Ce procédé de gestion temporelle multicanaux présente l'avantage de générer sur la diode 78 du module de communication un signal actif de faible rapport cyclique, et donc de pouvoir transmettre plus d'énergie instantanée dans cette diode tout en conservant une valeur moyenne compatible avec leurs caractéristiques. On augmente ainsi d'autant la distance de transmission. En effet, lors de chaque période du signal de synchronisation, la diode 78 n'est active que pendant le temps correspondant au canal alloué. La capacité énergétique des diodes dépendant essentiellement de l'intensité moyenne véhiculée, on peut augmenter considérablement cette intensité moyenne par rapport à la caractéristique nominale déterminée selon un fonctionnement sur une période complète de signal. Bien évidemment, il existe quand même une limite supérieure à ne pas dépasser pour l'intensité instantanée que les diodes peuvent supporter.

En pratique, les diodes 78, 79, 80, 81 de la liaison série infrarouge 85 sont choisies pour avoir une bande passante adaptée au débit et à la vitesse désirée de la transmission. Ainsi, des diodes ayant une bande passante de l'ordre de 1MHz permettent la gestion de huit canaux, c'est-à-dire la connexion de sept micro-ordinateurs 1 à 64kbits s sur un même boîtier de communication 75 déporté, et la transmission peut être valablement effectuée jusqu'à des distances comprises entre 5 et 10m. Ainsi, dans une même pièce, plusieurs micro-ordinateurs 1 selon l'invention pourront communiquer simultanément avec un même boîtier de communication 75 relié physiquement par ses ports 76, 77 à un périphérique et ou un micro-ordinateur personnel et ou une interface.

L'invention propose aussi un tel boîtier de communication 75 et un procédé de mise en communication par utilisation d'un tel boîtier et d'une liaison optique infrarouge.

Tous les circuits logiques et électroniques mentionnés ci-dessus sont largement connus en eux-mêmes par l'homme du métier qui sait en exécuter les fonctions à l'aide de composants électroniques, notamment à base de circuits intégrés, et ne seront donc pas décrits plus en détail.

Le micro-ordinateur 1 selon l'invention comporte un boîtier extérieur 86 de forme globalement parallélépipédique. L'écran 4 s'étend sur la majeure partie d'une 87 de ses grandes faces. Le boîtier extérieur 86 est totalement étanche et ne comporte aucun connecteur électrique extérieur, toutes les communications avec l'extérieur étant effectuées par les liaisons optiques infrarouges 68, 85 mentionnées ci-dessus. Néanmoins, le micro-ordinateur 1 selon l'invention peut comporter un connecteur 88 d'alimentation électrique extérieure permettant de brancher ce micro-ordinateur 1 sur le secteur. Egalement, le micro-ordinateur 1 selon l'invention comporte un boîtier de réception 89 de piles ou accumulateurs pour son alimentation électrique autonome. Dans le mode de réalisation représenté, le boîtier 89 permet la réception de quatre batteries au cadmium-nickel.

Le boîtier 86 extérieur supporte également un bloc 90 de transmission infrarouge incorporant les éléments nécessaires à la liaison optique infrarouge 85 avec un boîtier de communication 75 déporté, et également les éléments nécessaires à la liaison optique infrarouge 68 de communication avec la carte électronique amovible 11. Ce bloc 90 de transmission incorpore donc notamment les différentes diodes d'émission et de réception 78, 79, 69 et 70. Par ailleurs, le boîtier extérieur 86 définit un logement de réception 91 de la carte électronique amovible 11. Le bloc de transmission infrarouge 90 est situé à proximité de l'extrémité interne du logement de réception 91 de la carte électronique 11 afin de permettre une bonne transmission des informations entre ce bloc 90 et la carte électronique 11 via la liaison infrarouge 68.

Le boîtier extérieur 86 supporte également un bouton de mise en service 92 et la touche 20 permettant le passage du mode incrustation au mode superposition mentionné ci-dessus.

Dans le mode de réalisation représenté, on prévoit également d'autres touches de fonction préprogrammées qui facilitent l'utilisation du micro-ordinateur 1 selon l'invention. Ces touches sont disposées le long d'un des petits côtés de l'écran 4. On prévoit notamment :
- une touche 93 de notes permettant de faire apparaître une fenêtre à usage personnel de l'utilisateur, par exemple pour y noter des messages,
- une touche 94 de transmission permettant de commander la transmission de données via la liaison infrarouge 85,
- une touche 95 de configuration permettant de faire apparaître sur l'écran les informations relatives à la configuration du micro-ordinateur (taille mémoire encore disponible, état de charge des piles ou batterie, configuration de la liaison de transmission infrarouge,...),
- une touche 96 de réglage du contraste de la luminosité de l'écran 4,
- une touche 97 générant la visualisation automatiquement sur l'écran 4 d'un clavier alphanumérique ou d'un clavier spécifique prédéterminé,
- une touche 98 générant automatiquement la visualisation sur l'écran 4 d'un clavier numérique.

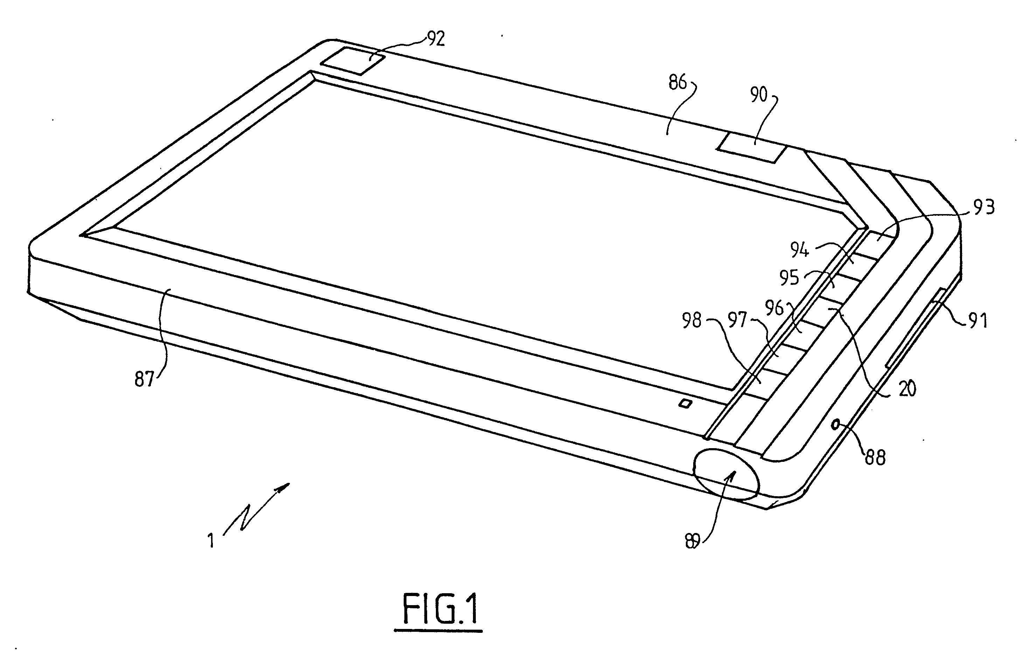

On a pu réaliser en pratique un micro-ordinateur 1 selon l'invention de 28mm d'épaisseur, d'un format correspondant au format normalisé A4, dont le poids est de l'ordre de 1kg tel que représenté sur la figure 1. Un tel micro-ordinateur 1 est totalement compatible avec les micro-ordinateurs personnels connus, notamment est compatible PC (marque déposée) et offre tous les avantages d'un tel micro-ordinateur connu. Il peut supporter et exploiter parfaitement tous les logiciels et progiciels d'applications développés pour ces micro-ordinateurs personnels. Il possède une mémoire de masse fixe et une mémoire de masse amovible.

De plus, la liaison optique infrarouge avec un boîtier de communication déporté 75 et la présence de la carte électronique amovible 11 au format ISO procure des avantages supplémentaires au micro-ordinateur 1 selon l'invention. Ces caractéristiques de l'invention sont néanmoins applicables à d'autre micro-ordinateurs, qu'ils soient portables, portatifs, ou non.

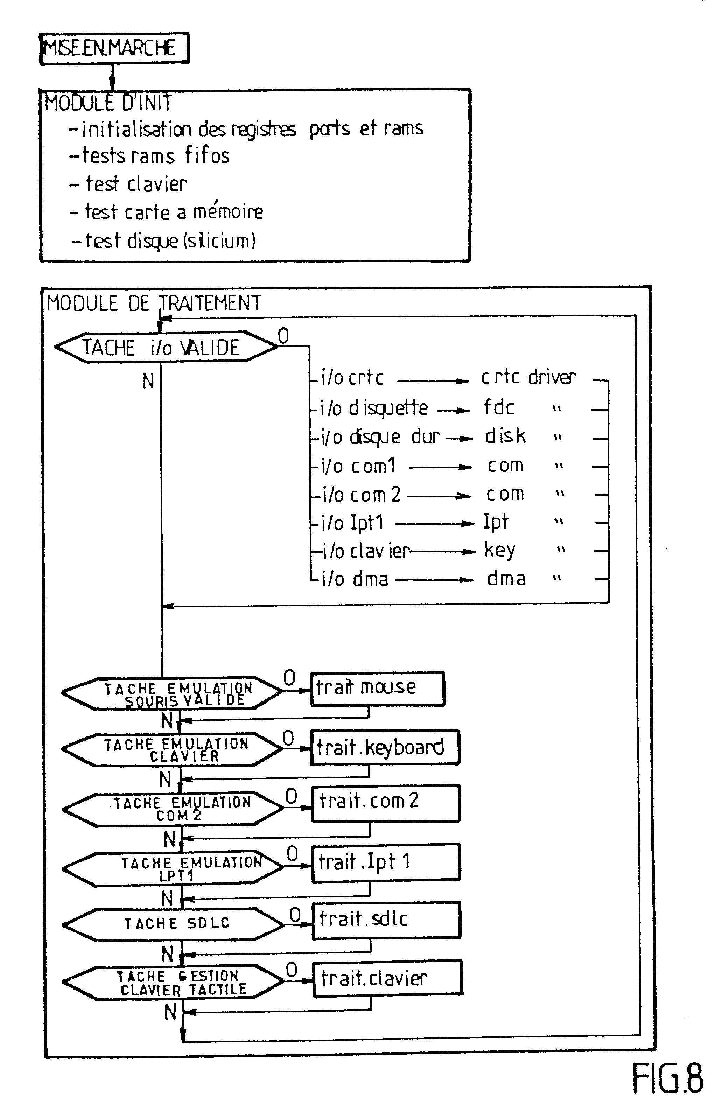

La figure 8 fournit un organigramme du programme BIOS ("Basic Input Output System") implanté sur le microprocesseur d'émulation 21 INTEL 80C196 selon l'invention. Cet organigramme est compréhensible par lui-même et ne nécessite pas de description plus détaillée pour l'homme du métier.

**Revendications**

1. Micro-ordinateur portatif destiné à être utilisé aussi bien comme un terminal de saisie d'informations, que comme un véritable micro-ordinateur personnel interactif, notamment compatible avec d'autres micro-ordinateurs personnels, et pouvant donc exécuter les mêmes programmes d'applications (bureautique, gestion, calcul, ...), comprenant au moins un microprocesseur central (2), une mémoire vive centrale (3), un écran de visualisation (4), et une pluralité de périphériques (11, 12, 13...) intégrés, caractérisé en ce qu'il comporte une surface tactile transparente (14) recouvrant l'écran de visualisation (4), et des moyens (15, 16, 17, 18, 19) électroniques d'émulation variable, au gré de l'utilisateur, de l'écran de visualisation (4) et de la surface tactile (14), permettant de gérer toute zone d'écran soit en tant que zone d'affichage d'informations, soit en tant que zone de visualisation de fonctions réalisées sur la surface tactile (14), et en ce que les moyens (15, 16, 17, 18, 19) électroniques d'émulation variable sont reliés à la surface tactile (14) d'une part pour pouvoir être eux-mêmes commandés à partir de cette surface tactile (14) et d'autre part pour en gérer l'émulation, de sorte qu'aucun clavier spécifique n'est nécessaire pour dialoguer avec le micro-ordinateur (1).

2. Micro-ordinateur selon la revendication 1, caractérisé en ce que le microprocesseur central (2) et les moyens (15, 16, 17, 18, 19) électroniques d'émulation variable sont aptes à gérer les zones d'écran selon deux modes possibles, l'utilisateur pouvant choisir l'un ou l'autre de ces modes : un mode incrustation selon lequel l'écran (4) est partagé, au gré de l'utilisateur, en au moins une zone d'affichage d'informations et au moins une zone de visualisation de fonctions ; et un mode superposition selon lequel tout l'écran (4) est utilisé pour l'affichage d'informations, la visualisation de fonctions réalisées sur la surface tactile (14) pouvant être, au gré de l'utilisateur, superposée à l'affichage d'informations qui se trouvent alors masquées par cette visualisation.

3. Micro-ordinateur selon la revendication 2, caractérisé en ce qu'il comporte des moyens (20) extérieurs de commande -notamment une touche- des moyens (15, 16, 17, 18, 19) électroniques d'émulation variable permettant de passer d'un mode de gestion de l'écran (4) à l'autre à tout instant.

4. Micro-ordinateur portatif destiné à être utilisé aussi bien comme un terminal de saisie d'informations, que comme un véritable micro-ordinateur personnel interactif, notamment compatible avec d'autres micro-ordinateurs personnels, et pouvant donc exécuter les mêmes programmes d'applications (bureautique, gestion, calcul, ...), comprenant au moins un microprocesseur central, une mémoire vive centrale, un écran de visualisation, et une pluralité de périphériques intégrés, caractérisé en ce qu'il comporte un microprocesseur (21) distinct du microprocesseur central (2). ce microprocesseur distinct (21) étant dédié à et programmé pour la gestion des périphériques et simulant en permanence pour le microprocesseur central (2) via une interface (19) le fonctionnement de ces périphériques.

5. Micro-ordinateur selon l'une quelconque des revendications 1 à 4, caractérisé en ce qu'il comporte des moyens (15, 16, 17, 18, 19) électroniques d'émulation variable comportant un microprocesseur d'émulation (21) indépendant dédié à et préprogrammé pour la gestion de l'écran (4) et de la surface tactile (14) selon les choix de l'utilisateur, et une interface électronique (19) reliant le microprocesseur central (2) au microprocesseur d'émulation (21).

6. Micro-ordinateur selon l'une quelconque des revendications 1 à 3 ou 5, caractérisé en ce que les moyens (15, 16, 17, 18, 19) électroniques d'émulation variable sont aptes à gérer le contact du doigt de l'utilisateur sur la surface tactile (14) à la manière d'une souris.

7. Micro-ordinateur selon l'une quelconque des revendications 4 à 6, caractérisé en ce que l'interface (19) comprend :
- une mémoire vive statique RAM à double accès (25) reliée aux bus de données (10, 30) et d'adresse (9a, 29a), de chacun des microprocesseurs central (2) et d'émulation (21),
- une mémoire FIFO d'adresse (26) dont l'entrée (31) est reliée au bus d'adresse (9a) du microprocesseur central (2), et dont la sortie (32) est reliée au bus de données (30) du microprocesseur d'émulation (21).
- une mémoire FIFO d'écriture (27) permettant de transférer les données par blocs du bus de données (10) du microprocesseur central (2) sur le bus de données (30) du microprocesseur d'émulation (21) auxquels elle est reliée,

- une mémoire FIFO de lecture (28) permettant de transférer les données par blocs du bus de données (3 ) du microprocesseur d'émulation (21) sur le bus de données (10) du microprocesseur central (2) auxquels elle est reliée.

8. Micro-ordinateur selon l'une quelconque des revendications 1 à 7, caractérisé en ce que l'écran (4) est un écran à cristaux liquides qui a une définition de 640 x 400 points et qui est émulé en mode CGA, les lignes étant doublées en mode superposition, une zone de 640 X 200 points étant émulée en mode CGA pour l'affichage des informations en mode incrustation.

9. Micro-ordinateur selon l'une quelconque des revendications 5 à 8, caractérisé en ce que le microprocesseur d'émulation (21) est relié à une mémoire vidéo (16) vive statique RAM recevant de ce microprocesseur (21) les données et les adresses permettant la visualisation des fonctions de la surface tactile (14), en ce que le microprocesseur central (2) est relié à une mémoire vidéo (18) vive statique RAM recevant de ce microprocesseur (2) les données et les adresses permettant l'affichage des informations, et en ce qu'il comporte un contrôleur d'écran (23) relié par un bus d'adresse (42) en parallèle aux deux mémoires vidéo (16, 18) et par un bus de données (43) en parallèle aux deux mémoires vidéo (16, 18).

10. Micro-ordinateur selon l'une quelconque des revendications 4 à 9, caractérisé en ce qu'il comporte un microprocesseur central (2) à technologie CMOS, et un microprocesseur distinct ou d'émulation (21) à technologie CMOS.

11. Micro-ordinateur selon les revendications 5 et 10, caractérisé en ce que les moyens (15, 16, 17, 18, 19) électroniques d'émulation variable comportent un microprocesseur d'émulation (21) INTEL 80C196 et en ce que le microprocesseur central (2) est un microprocesseur INTEL 80C186.

12. Micro-ordinateur selon l'une quelconque des revendications 1 à 11, caractérisé en ce qu'il comporte une mémoire de masse fixe (12) constituée d'une mémoire vive électronique supplémentaire pouvant servir pour le stockage des données ou au moins pour partie comme extension de la mémoire vive centrale (2).

13. Micro-ordinateur caractérisé en ce qu'il comporte une mémoire de masse amovible (11) constituée d'une carte électronique amovible comprenant une mémoire vive électronique (65) RAM statique et une source d'énergie électrique (66) de sauvegarde des données mémorisées.

14. Micro-ordinateur, caractérisé en ce qu'il comporte une mémoire de masse amovible (11) constituée d'une carte électronique amovible comprenant une mémoire électronique à base d'EPROM FLASH.

15. Micro-ordinateur selon l'une quelconque des revendications 13 et 14, caractérisé en ce que la carte électronique amovible (11) comprend au moins un microprocesseur (67) de gestion des données mémorisées.

16. Micro-ordinateur selon l'une quelconque des revendications 13 à 15, caractérisé en ce que la carte électronique amovible (11) lui est reliée par une liaison optique (68).

17. Micro-ordinateur selon la revendication 16, caractérisé en ce que ladite liaison optique (68) est une liaison série infrarouge dont la vitesse peut être choisie entre 9 600bits s et 375kbits s.

18. Micro-ordinateur, caractérisé en ce qu'il comporte un module de communication (74) par liaison optique infrarouge (85) avec un boîtier de communication (75) qui comprend au moins un port parallèle et au moins un port série pour pouvoir être relié à un périphérique et ou à un autre micro-ordinateur et ou à une interface.

19. Micro-ordinateur selon la revendication 18, caractérisé en ce que le module de communication (74) comporte un contrôleur HDLC (83) relié aux bus du microprocesseur d'émulation (21).

20. Micro-ordinateur selon l'une quelconque des revendications 18 et 19, caractérisé en ce que le module de communication (74) comporte un microséquenceur (84) de synchronisation commandé en séquencement par un signal émis par le boîtier de communication (75) placé à distance, via la liaison optique infrarouge (85).

21. Micro-ordinateur selon l'une quelconque des revendications 1 à 20, caractérisé en ce qu'il comprend un boîtier extérieur (86) de forme globalement parallélépipédique et en ce que l'écran (4) s'étend sur la majeure partie d'une (87) de ses grandes faces.

22. Micro-ordinateur selon l'une quelconque des revendications 1 à 21, caractérisé en ce qu'il comporte un boîtier extérieur (86) totalement étanche et qui ne comporte aucun connecteur électrique extérieur, toutes les communications avec l'extérieur étant effectuées par liaison optique (68, 85).

23. Micro-ordinateur selon l'une quelconque des revendications 1 à 22, caractérisé en ce qu'il comporte un boîtier de réception (89) de piles ou accumulateurs pour son alimentation électrique.

24. Mémoire de masse amovible pour micro-ordinateur, caractérisée en ce qu'elle est constituée d'une carte électronique amovible (11) à mémoire électronique permanente.

25. Mémoire selon la revendication 24, caractérisée en ce que la mémoire électronique permanente est constituée soit d'une RAM statique et d'une source d'énergie électrique (66) de sauvegarde des données mémorisées, soit d'une mémoire à base d'EPROM FLASH.

26. Mémoire selon l'une quelconque des revendications 24 et 25, caractérisée en ce qu'elle comprend au moins un microprocesseur (67) de gestion des données mémorisées.

27. Mémoire selon l'une quelconque des revendications 24 à 26, caractérisée en ce qu'elle comporte des moyens de communication par liaison optique (68) -notamment par liaison série infrarouge dont la vitesse peut être choisie entre 9 600bits/s et 375kbits/s- avec un micro-ordinateur.

28. Boîtier de communication entre un micro-ordinateur et un périphérique et/ou un autre micro-ordinateur, caractérisé en ce qu'il comporte des moyens de communication par liaison optique, et des moyens de connexion électrique, notamment au moins un port série et/ou au moins un port parallèle.

29. Procédé de mise en communication d'au moins un micro-ordinateur avec au moins un périphérique et/ou un autre micro-ordinateur, caractérisé en ce que l'on connecte le dit périphérique et/ou l'autre micro-ordinateur à un boîtier de communication par liaison optique avec le dit au moins un micro-ordinateur.

EP 0 395 469 A2

FIG.1

FIG.2

FIG.3

EP 0 395 469 A2

FIG.4a

FIG.4b

EP 0 395 469 A2

```
┌─────────────────────────────────────────────────────────┐
│       Début de trame de rafraîchissement                │ 54
└─────────────────────────────────────────────────────────┘
                            │
┌─────────────────────────────────────────────────────────┐
│ Par defaut Bus DATA actif =Mémoire video microproc. central │ 55
└─────────────────────────────────────────────────────────┘
                            │
┌─────────────────────────────────────────────────────────┐
│   Chargement premiere valeur de FIFO d'adresse           │ 56
└─────────────────────────────────────────────────────────┘
                            │
┌─────────────────────────────────────────────────────────┐
│  Présentation de l'adresse par le controleur d'écran     │ 57
└─────────────────────────────────────────────────────────┘
                            │
                          ◇ 58
                   non    / \
                  ◄──────◇   ◇ Egalité des adresses
                          \ /
                           ▼ oui
┌─────────────────────────────────────────────────────────┐
│  Bus DATA actif =Mémoire Video Micro d'émulation         │ 59
└─────────────────────────────────────────────────────────┘
                            │
┌─────────────────────────────────────────────────────────┐
│ Chargement dans le comparateur de la donnée suivante dela FIFO │ 60
└─────────────────────────────────────────────────────────┘
                            │
┌─────────────────────────────────────────────────────────┐
│ Présentation de l'adresse en cours par le controleur d'écran │ 61
└─────────────────────────────────────────────────────────┘
                            │
                          ◇ 62
                   non    / \
                  ◄──────◇   ◇ Egalité des adresses
                          \ /
                           ▼ oui
┌─────────────────────────────────────────────────────────┐
│ Bus DATA actif =Mémoire Vidéo microprocesseur central    │ 63
└─────────────────────────────────────────────────────────┘
                            │
┌─────────────────────────────────────────────────────────┐
│ Chargement dans le comparateur de la donnée suivante FIFO │ 64
└─────────────────────────────────────────────────────────┘
```

FIG.5

Synchro

Canal 1
Canal 2
Canal 8

--Période trame--

Synchro

_FIG.7_

μP EMULATION

21

HDLC

83

TX

RX

MICRO-SEQUENCEUR

84

74

78

79

85

TX

RX

69

70

29|30

68

72

71

11

65

67

66

75

81

80

82

76

77

_FIG.6_

EP 0 395 469 A2

MISE.EN.MARCHE

**MODULE D'INIT**
- initialisation des registres ports et rams
- tests rams fifos
- test clavier
- test carte a mémoire
- test disque (silicium)

**MODULE DE TRAITEMENT**

TACHE i/o VALIDE — O

N

- i/o crtc ——→ crtc driver
- i/o disquette —→ fdc  "
- i/o disque dur —→ disk  "
- i/o com1 ——→ com  "
- i/o com 2 ——→ com  "
- i/o Ipt1 ——→ Ipt  "
- i/o clavier ——→ key  "
- i/o dma ——→ dma  "

TACHE EMULATION SOURIS VALIDE — O → trait mouse

N

TACHE EMULATION CLAVIER — O → trait.keyboard

N

TACHE EMULATION COM 2 — O → trait.com 2

N

TACHE EMULATION LPT1 — O → trait.Ipt 1

N

TACHE SDLC — O → trait.sdlc

N

TACHE GESTION CLAVIER TACTILE — O → trait.clavier

N

FIG.8